# EUROPEAN PATENT SPECIFICATION

(11) **EP 4 423 182 B1**
(45) Date of publication and mention of the grant of the patent: **04.03.2026**
(21) Application number: 22829956.6
(22) Date of filing: 27.10.2022
(51) Int. Cl.: C08J 11/08, B29B 17/02, B32B 17/10, C08F 8/28, C08F 8/48, B32B 7/022, B32B 3/26, C08F 16/06, C08J 11/06, C08L 29/14, B32B 27/22, B32B 27/30, B32B 27/08, B32B 7/12

(54) **RECOVERING POLY(VINYL BUTYRAL) POLYMER**
WIEDERGEWINNUNG VON POLYVINYLBUTYRALPOLYMER
RÉCUPÉRATION DE POLYMÈRE DE POLY(BUTYRAL DE VINYLE)

(30) Priority: 28.10.2021 US 202163263162 P; 14.07.2022 US 202263368383 P; 28.09.2022 US 202263377410 P; 28.09.2022 US 202263377402 P; 28.09.2022 US 202263377405 P
(43) Date of publication of application: 04.09.2024
(73) Proprietor: Solutia Inc., St. Louis, Missouri 63141 (US)
(72) Inventor: YINONG, Ma, Longmeadow, MA 01106 (US)
(74) Representative: Wallinger Ricker Schlotter Tostmann
(86) International application number: PCT/US2022/047972
(87) International publication number: WO 2023/076442

(56) References cited:
- WO-A1-2015/169705
- US-A- 3 256 212
- US-A- 4 205 146
- US-A1- 2009 209 667
- US-A1- 2019 106 561

## Description

### FIELD OF THE INVENTION

The present invention is related to the field of poly(vinyl butyral) resin manufacture, and, specifically, the present invention is in the field of the recovery, recycling, and reuse of post-industrial and post-consumer poly(vinyl butyral).

### DESCRIPTION OF RELATED ART

Laminated glass panels, such as automobile windshields and architectural safety glass, are typically composed of two sheets of glass laminated together with an interposed, plasticized polymer layer. Poly(vinyl butyral) ("PVB") is a common polymer that typically forms the main component in the polymeric interlayer of the vast majority of automotive windshields and architectural safety glass. Commonly, PVB resin is manufactured through a synthesis process that begins with the separation of ethane directly from natural gas or from the petroleum refining process. Ethane is then steam cracked to produce ethene (ethylene), which, along with acetic acid feedstock, is used to produce vinyl acetate monomers. Vinyl acetate monomers, through free-radical polymerization, are polymerized to poly(vinyl acetate). Poly(vinyl acetate) is hydrolyzed to poly(vinyl alcohol), which is then reacted with butyraldehyde to form poly(vinyl butyral).

The above-described synthesis process is energy intensive and dependent upon the use of non-renewable feedstocks. Consequently, the prospect of recycling PVB resin from post-industrial PVB material and post-consumer PVB material has been long considered in the art as a potentially valuable source of PVB that would be less costly to produce than virgin PVB resin and that could significantly reduce the environmental footprint of PVB production. Exemplary sources of post-industrial PVB material include PVB trim that is recycled and PVB rolls that are out of specification, damaged, or otherwise unusable. Exemplary sources of post-consumer PVB material include previously-used automotive windshields and architectural safety glass, as well as other previously-used consumer products such as electric power devices (e.g., solar photovoltaic devices) and electronic display devices.

Despite the long felt need in the art, there are several problems with recycling PVB. For example, both post-industrial and post-consumer PVB materials generally comprise mixtures of distinct PVB compositions, as obtained from various products and/or from differing manufacturers, as well as different additives such as plasticizer, UV absorbers, solar absorbers and the like. As a result, post-industrial and/or post-consumer PVB mixtures may comprise PVB of different poly(vinyl butyral) compositions, including different polyvinyl alcohol (PVOH) contents. Such compositional differences within the mixtures of recycled PVB invariably lead to unacceptable high haze and/or discoloration of the recovered PVB despite the PVB being removed of other contaminants. Specifically, when PVB materials of significant compositional difference are mixed together, the chemical incompatibility results in a hazy or cloudy material due to immiscible microdomains with different refractive indices, which greatly limits its utility in recycling.

Additionally, when recycling PVB materials having different compositions, it can be difficult to produce a recovered PVB material with a specific composition necessary for particular end-uses. For instance, it may be necessary to recycle a PVB feed composition comprised of two different PVB-containing compositions and to produce a recovered PVB material that can be used as skin layers of an acoustic trilayer interlayer. Alternatively, it may be necessary to use the recovered PVB material as a core layer of an acoustic trilayer interlayer. However, in some interlayers, the residual PVOH content of PVB material used in skin layers is significantly different from the residual PVOH content of PVB material used in core layers.

As such, there exists a need to process post-industrial and/or post-consumer PVB manner in a manner that can accurately control the composition (e.g., the residual PVOH content) of the recovered PVB, such that the recovered PVB is produced with a specific composition (e.g., having uniform residual PVOH content) necessary to be used within interlayers of new laminated glass panels.

US 4 205 146 discloses that by varying the reaction conditions in the preparation of polyvinylbutyral by acetalization of polyvinyl alcohol with n-butyraldehyde it is possible to obtain the polyvinylbutyral in a coarse-grain or fine-grained form. The production of polyvinylbutyral having improved properties is possible by using a polyvinylbutyral having a content of from 17 to 24% by weight of vinyl alcohol units as starting material for an after-treatment in the presence of an organic sulfonic acid having an emulsifying effect. The polyvinylbutyral obtained is particularly suitable for the manufacture of compound sheets.

US 2009/209667 discloses a method of recycling poly(vinyl butyral) resin and incorporating that poly(vinyl butyral) resin into laminated glass and other articles. Poly(vinyl butyral) resin is recovered from discarded laminated glass through a well defined process that includes all or most of the steps of granulation of the laminated glass, solvent extraction of plasticizer and impurities, dissolution of poly(vinyl butyral), pre-filtration of insoluble contaminants, color removal via adsorption or bleaching, post-filtration of carbon particles, precipitation of poly(vinyl butyral), and washing, stabilization, and drying of poly(vinyl butyral) resin.

US 2019/106561 discloses resin compositions, layers, and interlayers comprising a poly(vinyl acetal) resin that includes residues of an aldehyde other than n-butyraldehyde. Such compositions, layers, and interlayers can exhibit enhanced or optimized properties as compared to those formulated with comparable poly(vinyl n-butyral) resins.

### SUMMARY

One aspect the present invention concerns a process of recovering poly(vinyl butyral) (PVB) as defined in claim 1. Preferred embodiments are defined in the claims depending thereon.

Another aspect of the present invention concerns a process of recovering poly(vinyl butyral) (PVB) as defined in claim 5. Preferred embodiments are defined in the claims depending thereon.

Another aspect of the present invention concerns a process of recovering poly(vinyl butyral) (PVB) as defined in claim 9. Preferred embodiments are defined in the claims depending thereon.

Another aspect of the present invention concerns a process of recovering poly(vinyl butyral) (PVB) as defined in claim 11. Preferred embodiments are defined in the claims depending thereon.

### BRIEF DESCRIPTION OF THE DRAWINGS

FIG. 1A is a flowchart of a process for recovering PVB according to embodiments of the present invention;
FIG. 1B is a flowchart of another process for recovering PVB according to embodiments of the present invention;
FIG. 2A is a schematic illustration of a PVB reclamation system according to embodiments of the present invention.
FIG. 2B is a schematic illustration of another PVB reclamation system according to embodiments of the present invention;
FIG. 3 is a schematic illustration of a laminated glass panel comprising a pair of glass plates opposing a polymer interlayer, with the polymer interlayer comprising a trilayer with a pair of skin layers opposing a core layer;
FIG. 4 is another schematic illustration of a laminated glass panel comprising a pair of glass plates opposing a polymer interlayer, with the polymer interlayer having a wedge shape;
FIG. 5 is a flowchart of another process for recovering PVB according to embodiments of the present invention;
FIG. 6 is a flowchart of yet another process for recovering PVB according to embodiments of the present invention;
FIG. 7 is a flowchart of yet another process for recovering PVB according to embodiments of the present invention; and
FIG. 8 is a flowchart of yet another process for recovering PVB according to embodiments of the present invention.

### DETAILED DESCRIPTION

Embodiments of the present invention are directed to methods of recovering, recycling, and/or re-using poly(vinyl butyral) ("PVB"). More particularly, embodiments of the present invention are directed to methods of recycling post-industrial and/or post-consumer PVB material to obtain PVB polymer of sufficient quality that can be used to form polymer interlayers and/or laminated glass panels comprising polymer interlayers. In some embodiments, the PVB polymer recycled from post-industrial and/or post-consumer PVB material may be used other applications.

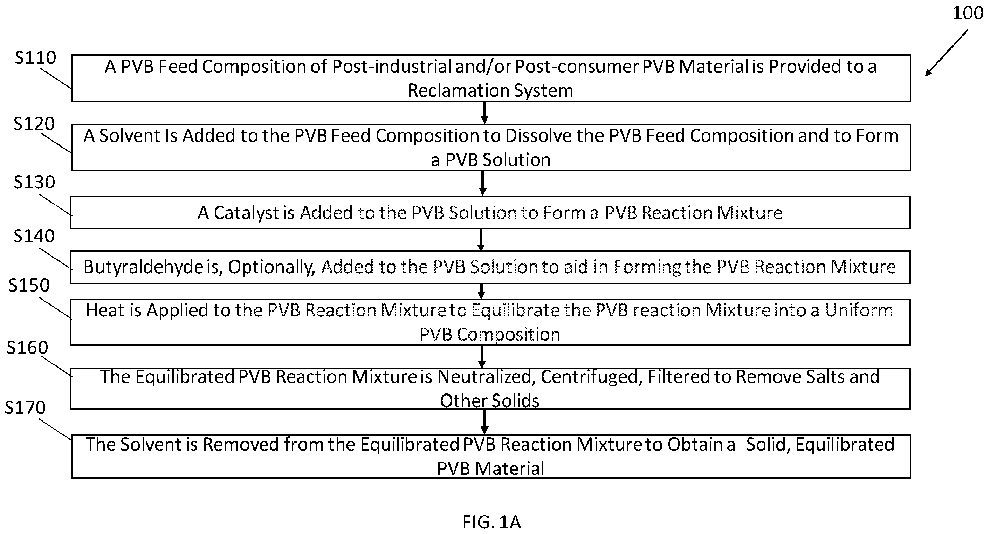

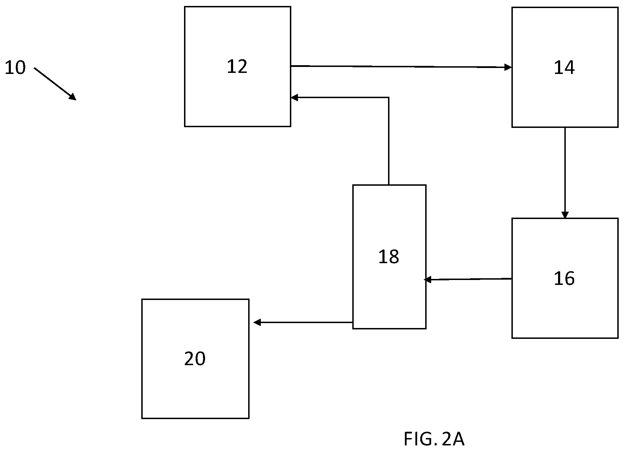

In more detail, FIG. 1A illustrates an exemplary PVB recovery process 100 for recycling PVB according to embodiments of the present invention. The method includes a step S110 of providing post-industrial and/or post-consumer PVB material to a reclamation system. An exemplary embodiment of a reclamation system 10 is illustrated schematically in FIG. 2A, which may be in the form of a continuous reclamation system of interconnected tanks, in which the various steps and processes discussed herein may take place. It should be understood, however, that embodiments contemplate the use of various reclamation systems, such as a single, batch reactor reclamation system. For instance, a single, batch reactor may comprise a tank in the form of a continuous stirred-tank reactor (CSTR) or another similar reactor, such as a counter-current screw press extractor or other equipment known to one of skill in the art. One or more (or all) of the steps of the process 100 described herein may be carried out within the single, batch reactor. Alternatively, a continuous reclamation system, as illustrated by the reclamation system 10, may be used, with the continuous reclamation system comprising a plurality of interconnected tanks (e.g., CSTRs) or compartments in a tubular arrangement. In the continuous reclamation system, each of the steps may be independently carried out within one or more of the plurality of tanks or compartments. Benefits of the continuous reclamation system may include higher throughput and higher efficiencies compared to the single, batch reactor.

The PVB material added to the reclamation system 10 may be referred to herein as a "PVB feed composition," and as noted above may comprise post-industrial and/or post-consumer PVB material. In some embodiments, however, new or virgin PVB material may be used. Nevertheless, the PVB feed composition may be added to a mixing tank 12 of the reclamation system 10. The mixing tank 12 may be configured with various mechanisms necessary to combine, mix, and/or agitate the materials added into the tank 12. In some embodiments, the mixing tank 12 may also be configured to apply heat to the materials added into the mixing tank 12. In some embodiments, a solvent may be added, as a step S120, into the mixing tank 12 of the reclamation system 10 to dissolve the PVB feed composition and to form a PVB solution. In some embodiments, the solvent may be added to the mixing tank 12 prior to the PVB feed composition being added to the mixing tank 12. In other embodiments, the solvent may be added to the mixing tank 12 after the PVB feed composition has been added to the mixing tank 12.

An additional step S130 may comprise adding a catalyst into the mixing tank 12 to form a PVB reaction mixture from the PVB solution (i.e., the PVB feed composition and solvent). In various embodiments, the catalyst may be added to the mixing tank 12 prior to or after the addition of the PVB feed composition. An additional step S140 may comprise, optionally, adding butyraldehyde, into the mixing tank 12 to aid in forming the PVB reaction mixture from the PVB solution. In various embodiments, the butyraldehyde may be added to the mixing tank 12 prior to or after the addition of PVB feed composition. During and/or prior to step S140, the PVB reaction mixture may be heated within the mixing tank 12 to facilitate mixing and/or to allow some initial equilibration of different PVB-containing compositions within the PVB feed composition. From the mixing tank 12, the PVB reaction mixture may be transferred to a holding tank 14 where the PVB reaction mixture, in step S150, is heated for an amount of time to equilibrate the PVB reaction mixture into a uniform PVB composition. As used herein, the term "equilibrated" is used to mean that the composition that is equilibrated has been processed to at least include a generally uniform residual polyvinyl alcohol (PVOH) content.

Once the PVB reaction mixture has been equilibrated (so as to form a uniform PVB composition), the equilibrated PVB reaction mixture may be transferred to a filtering tank 16 where the equilibrated PVB reaction mixture may be filtered, in step S160, to remove salts and other remaining solids. Such filtering may be performed by mesh screens, centrifugal filtration systems, or other suitable methods. In some embodiments, the PVB reaction mixture may undergo centrifugation prior to filtering. In some embodiments, the step S160 may further include the addition of a base to the equilibrated PVB reaction mixture. In such embodiments, the base may be added prior to or after the filtering of the equilibrated PVB reaction mixture. For example, the base may be added prior to filtration and/or centrifugation so as to neutralize the catalyst, such that the catalyst may then be extracted via the filtration and/or centrifugation.

The filtered, equilibrated PVB reaction mixture may be transferred to a solvent column 18, where in step S170, remaining solvent may be extracted, such as through evaporation. In certain embodiments, the solvent may be reused in the PVB recovery process 100 by being added back into the mixing tank 12 from the solvent column 18. With the solvent removed from the equilibrated PVB reaction mixture, the remaining solids comprise solid, equilibrated PVB material, which may be provided to an extruder 20, so as to be used in an extrusion process to form various PVB products, such as in the manufacture of polymer interlayers and/or laminated glass panels comprising polymer interlayers, or to be used in a resin manufacturing process and re-acetalized to form PVB resin. The recovered PVB may also be used in other applications, such as adhesives that can be formed with the recovered PVB, as well as flooring, ceramic compositions, binders, coatings, inks, dispersions, and other applications.

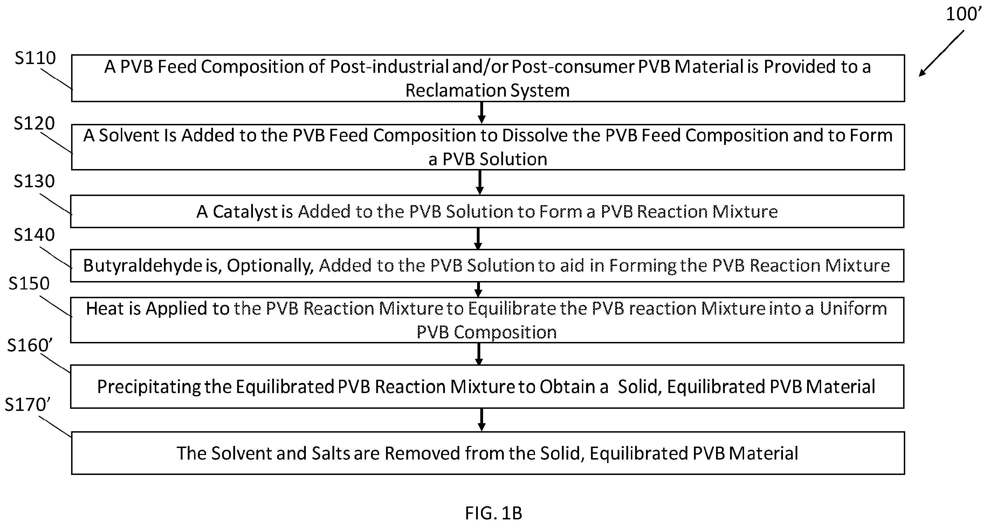

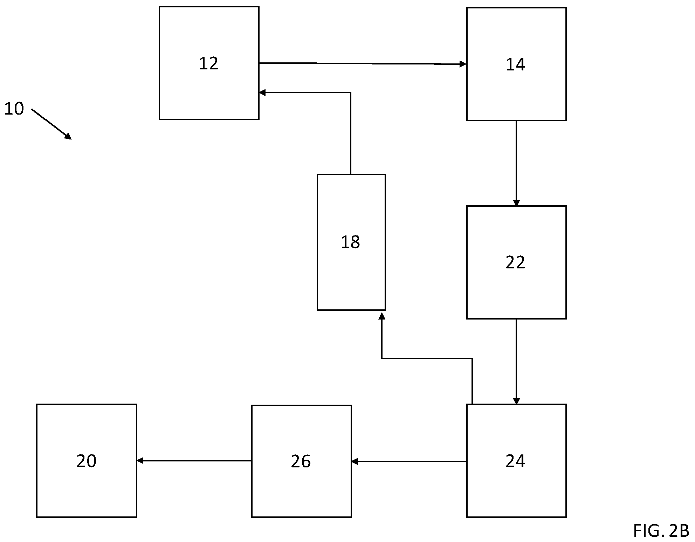

An alternative PVB recovery process 100' for recycling PVB according to embodiments of the present invention is shown in FIG. 1B. The process 100' generally includes the same steps S110-S150 as discussed above with respect to the process 100. The process 100' may be implemented using a reclamation system 10' illustrated schematically in FIG. 2B. In contrast to process 100, however, after the PVB reaction mixture has been equilibrated in process 100' (so as to form a uniform PVB composition) within the holding tank 14, the equilibrated PVB reaction mixture may be transferred to a precipitation tank 22, as illustrated in FIG. 2B, instead of the filtering tank 16. In the precipitation tank 22, solid, equilibrated PVB material may be precipitated out of the equilibrated PVB reaction mixture. In some embodiments, the PVB reaction mixture may be neutralized, via a base, prior to, during, or after precipitation. Regardless, the resulting solid, equilibrated PVB material may be transferred from the precipitation tank 22 to a wash tank 24 for washing to remove remaining salts and other impurities, as provided in step S170' of FIG. 1B. In addition, solvent may be removed and recovered from the wash tank 24, so as to be re-introduced to the mixing tank 12 (e.g., via the solvent column 18) as was previously described.

Remaining with FIG. 2B, from the wash tank 24, the solid, equilibrated PVB material may be transferred to a drying tank 26 where any remaining water and other fluids can be removed. The resulting product is a recovered PVB polymer, which can be provided to the extruder 20, so as to be used in an extrusion process to form various PVB products, such as in the manufacture of polymer interlayers and/or laminated glass panels comprising polymer interlayers, or to be used in a resin manufacturing process and re-acetalized to form PVB resin. The recovered PVB may also be used in other applications, such as adhesives that can be formed with the recovered PVB, as well as flooring, ceramic compositions, binders, coatings, inks, dispersions, and other applications.

The following description provides further specificity to the PVB recovery processes 100 and/or 100' described above. In some embodiments, the PVB feed composition may comprises at least two different PVB-containing compositions. For example, the PVB feed composition may include a first PVB-containing composition and a second PVB-containing composition, with the first PVB-containing composition having a different PVB content (e.g., based on weight percent (wt.%)) than the second PVB-containing composition. Alternatively, or in addition, the first PVB-containing composition may have a different PVOH content (e.g., based on weight percent (wt.%)) than the second PVB-containing composition. Alternatively, or in addition, the first PVB-containing composition may have a different vinyl acetate content (e.g., based on weight percent (wt.%)) than the second PVB-containing composition. Alternatively, or in addition, the first PVB-containing composition may have a different plasticizer content (e.g., based on parts per hundred resin parts ("phr")) than the second PVB-containing composition. Alternatively, or in addition, the first PVB-containing composition may have a different plasticizer type than the second PVB-containing composition. Alternatively, or in addition, the first PVB-containing composition may have a different molecular weight than the second PVB-containing composition. Alternatively, or in addition, the first PVB-containing composition may have various additional (or fewer) additives than the second PVB-containing composition. Such additives may include, for example, adhesion control agents, UV stabilizers, anti-oxidants, IR absorbers, and colorants.

Turning first to the PVOH content of the PVB feed composition, the PVB feed composition will commonly have a residual PVOH content from about 9 to about 25 wt.% or more, although other amounts are possible, depending on the specific starting materials. For example, the various PVB-containing compositions of the PVB feed composition may each include a residual PVOH content from about 0 to 8 wt.%, from about 8 to 12 wt.%, from about 12 to 16 wt.%, from about 16 to 20 wt. %, from about 20 to 26 wt. %, from about 26 to 32 wt.%, from about 32 to 40 wt.%, from about 40 to 90 wt.%, or from about 90 to 100 wt.%. Alternatively, or in addition, the various PVB-containing compositions of the PVB feed composition may each include a residual PVOH content of at least 8, at least 9, at least 9.5, at least 10, at least 10.5, at least 11, at least 11.5, at least 12, at least 12.5, at least 13, at least 13.5, at least 14, at least 14.5, at least 15, at least 15.5, at least 16, at least 16.5, at least 17, at least 17.5, at least 18, at least 18.5, at least 19, at least 19.5, at least 20, at least 25, at least 26, at least 30, at least 32, at least 35, at least 40, at least 50, at least 60, at least 70, at least 80, or at least 90 wt.% and/or not more than 100, not more than 90, not more than 80, not more than 70, not more than 60, not more than 50, not more than 40, not more than 35, not more than 32, not more than 30, not more than 25, not more than 22, not more than 20, not more than 19, not more than 18, not more than 17, not more than 16, not more than 15, not more than 14, not more than 13, not more than 12, not more than 11, not more than 10, not more than 9, or not more than 8 wt.%.

As discussed above, the PVB feed composition may comprise a plurality of different PVB-containing compositions, with each having different PVOH contents. For instance, a first PVB-containing composition of the PVB feed composition may have a residual PVOH content from about 9 to 15 wt.%, while a second PVB-containing composition of the PVB feed composition may have a residual PVOH content from about 15 to 25 wt. Nevertheless, such exemplary PVOH amounts are only provided for illustrative purposes, and other ranges of residual PVOH contents (or different PVOH ranges) may also be possible, depending on the materials used and the sources of the materials. For instance, the plurality of different PVB-containing compositions of a given PVB feed composition may each have any of the residual PVOH contents (or PVOH ranges) listed above in the previous paragraph. Furthermore, in some specific embodiments, the first and second PVB-containing compositions from the PVB feed composition may have a relative difference in residual PVOH content of: at least at least 0.5 wt.%, at least 1 wt.%, at least 2 wt.%, at least 4 wt.%, at least 6 wt.%, at least 8 wt.%, at least 10 wt.%, at least 12 wt.%, at least 14 wt. %, or at least 16 wt.% and/or from 0.5 and 16 wt.%, from 0.5 and 14 wt.%, from 1 and 12 wt.%, from 2 and 10 wt.%, or from 4 and 8 wt.%.

The PVB feed composition may also include varying amounts and types of plasticizer, which is generally used to soften the PVB and/or to lower the glass transition temperature (T_{g}) of the PVB. Contemplated types of plasticizers include, but are not limited to, esters of a polybasic acid, a polyhydric alcohol, triethylene glycol di-(2-ethylbutyrate), triethylene glycol di-(2-ethylhexonate) (known as "3-GEH"), triethylene glycol diheptanoate, tetraethylene glycol diheptanoate, dihexyl adipate, dioctyl adipate, hexyl cyclohexyladipate, mixtures of heptyl and nonyl adipates, diisononyl adipate, heptylnonyl adipate, dibutyl sebacate, and polymeric plasticizers such as oil-modified sebacic alkyds and mixtures of phosphates and adipates, and mixtures and combinations thereof. In some embodiments, 3-GEH is particularly preferred. Other examples of suitable plasticizers can include, but are not limited to, tetraethylene glycol di-(2-ethylhexanoate) ("4-GEH"), di(butoxyethyl) adipate, and bis(2-(2-butoxyethoxy)ethyl) adipate, dioctyl sebacate, nonylphenyl tetraethylene glycol, and mixtures thereof.

Other suitable plasticizers may include blends of two or more distinct plasticizers, including but not limited to those plasticizers described above. Still other suitable plasticizers, or blends of plasticizers, may be formed from aromatic groups, such polyadipates, epoxides, phthalates, terephthalates, benzoates, toluates, mellitates and other specialty plasticizers. Further examples include, but are not limited to, dipropylene glycol dibenzoate, tripropylene glycol dibenzoate, polypropylene glycol dibenzoate, isodecyl benzoate, 2-ethylhexyl benzoate, diethylene glycol benzoate, propylene glycol dibenzoate, 2,2,4-trimethyl-1,3-pentanediol dibenzoate, 2,2,4-trimethyl-1,3-pentanediol benzoate isobutyrate, 1,3-butanediol dibenzoate, diethylene glycol di-o-toluate, triethylene glycol di-o-toluate, dipropylene glycol di-o-toluate, 1,2-octyl dibenzoate, tri-2-ethylhexyl trimellitate, di-2-ethylhexyl terephthalate, bisphenol A bis(2-ethylhexaonate), ethoxylated nonylphenol, and mixtures thereof. In some embodiments, the plasticizer can be selected from the group consisting of dipropylene glycol dibenzoates, tripropylene glycol dibenzoates, and combinations thereof.

As noted above, the plasticizer content of PVB feed composition (e.g., resin or recycled PVB) will be measured in phr, on a weight per weight basis. For example, if 30 grams of plasticizer is added to 100 grams of polymer resin, the plasticizer content of the resulting plasticized polymer would be 30 phr. The PVB feed composition may have various amounts and/or types of plasticizer. For example, the various PVB-containing compositions of the PVB feed composition may each include a plasticizer content from about 0 to 10 phr, from about 10 to 20 phr, from about 20 to 30 phr, from about 30 to 40 phr, from about 40 to 50 phr, from about 50 to 60 phr, from about 60 to 70 phr, from about 70 to 80 phr, from about 80 to 90 phr, or from about 90 to 100 phr. Alternatively, or in addition, the various PVB-containing compositions of the PVB feed composition may each include a plasticizer content of at least about 20 phr, at least about 25 phr, at least about 30 phr, at least about 35 phr, at least about 38 phr, at least about 40 phr, at least about 45 phr, at least about 50 phr, at least about 55 phr, at least about 60 phr, at least about 65 phr, at least about 67 phr, at least about 70 phr, at least about 75 phr of one or more plasticizers. In some embodiments, the various PVB-containing compositions of the PVB feed composition may each also include not more than about 100 phr, not more than about 85 phr, not more than 80 phr, not more than about 75 phr, not more than about 70 phr, not more than about 65 phr, not more than about 60 phr, not more than about 55 phr, not more than about 50 phr, not more than about 45 phr, not more than about 40 phr, not more than about 38 phr, not more than about 35 phr, or not more than about 30 phr of one or more plasticizers.

In addition, the PVB feed composition may have various PVB contents. Such PVB contents may be defined as butyral or acetal contents. The various PVB-containing compositions of the PVB feed composition may each include PVB contents and/or butyral/acetal contents of at least about 50 wt.%, at least about 55 wt.%, at least about 60 wt.%, at least about 65 wt.%, at least about 70 wt.%, at least about 75 wt.%, at least 80 wt.%, at least 85 wt.%, at least 90 wt.%, at least 95 wt. %, or up to 100 wt. %, and/or from 50 to 100 wt.%, from 50 to 90 wt.%, from 50 to 80 wt.%, from 50 to 70 wt.%, from 50 to 60 wt.%, from 60 to 100 wt.%, from 60 to 90 wt.%, from 60 to 80 wt.%, from 60 to 70 wt.%, from 70 to 100 wt.%, from 70 to 90 wt.%, from 70 to 80 wt.%, from 80 to 100 wt. %, from 80 to 90 wt. %, or from 90 to 100 wt.%.

The PVB feed composition may have various vinyl acetate contents. The various PVB-containing compositions of the PVB feed composition may each include vinyl acetate contents of up to about 15 wt.%, up to about 10 wt.%, or up to about 5 wt.%, and/or from 5 to 15 wt.%, from 5 to 10 wt.%, or from 10 to 15 wt.%.

In addition, the PVB feed composition may have various molecular weights. The various PVB-containing compositions of the PVB feed composition may each include molecular weights from about 50,000 to about 600,000, about 70,000 to about 450,000, about 100,000 to about 425,000, about 150,000 to 350,000, and/or 200,000 to 300,000 Daltons, as measured by size exclusion chromatography using low angle laser light scattering. As used herein, the term "molecular weight" means the weight average molecular weight. Alternatively, or in addition, certain specific embodiments, the various PVB-containing compositions of the PVB feed composition may each include molecular weights from about 100,000 to about 175,000 Daltons, from about 120,000 to about 150,000 Daltons, from about 200,000 to about 250,000, from about 250,000 to about 350,000 Daltons, and/or from about 275,000 to about 325,000 Daltons.

Furthermore, the PVB feed composition may have various other additives or impurities. The various PVB-containing compositions of the PVB feed composition may each include differing amounts of adhesion control agents (ACAs), UV stabilizers, anti-oxidants, IR absorbers or blockers (e.g., indium tin oxide, antimony tin oxide, lanthanum hexaboride (LaB₆) and cesium tungsten oxide), colorants (e.g., dyes and pigments), anti-blocking agents, flame retardants, processing aides, flow enhancing additives, lubricants, impact modifiers, nucleating agents, thermal stabilizers, UV absorbers, dispersants, surfactants, chelating agents, coupling agents, adhesives, primers, reinforcement additives, and fillers, among other additives known to those of ordinary skill in the art

Before adding the PVB feed composition to the reclamation systems 10 and/or 10', as provided in step S110 in the PVB recovery processes 100 and/or 100', the material of the PVB feed composition may be cut, chopped, and/or shredded to form small (such as 2 to 20 mm, although other sizes, including up to 1 cm, can be used depending on the equipment and other factors) diameter chips, granules, pellets or flakes of PVB material. As described above, the PVB feed composition may comprise a plurality of different PVB-containing compositions. As such, the flakes, chips and/or pellets of PVB material may be combined together to form a mixed composition (e.g., having a mixed amount of PVOH or other elements). Such a PVB feed composition may then be provided to the reclamation systems 10 and/or 10', which as noted previously, may be in the form of a single, batch reactor recycling system or a continuous reclamation recycling system.

Turning again to step S120 of the PVB recovery processes 100 and/or 100', the solvent that is added to the reclamation systems 10 and/or 10' may comprise various solvents sufficient to selectively dissolve the components of the PVB feed composition and to form a solution or mixture. Examples of suitable solvents may include a mixture of one or more alcohols, e.g., ethanol, methanol or isopropanol. The solvent is configured to dissolve the PVB feed composition to form a PVB solution that has the form of a hazy, viscous solution. In some embodiments, some amount of water may also be added to the solvent and/or to the PVB feed composition to assist with dissolving of the PVB feed composition. Other alcohols, such as alcohols having more than three (3) carbon atoms, such as n-butanol, or alcohols having more than one hydroxyl group (i.e., diols and triols) can also be used.

Turning to step S130, the catalyst may comprise various catalysts, such as sulfuric acid, sulfonic acid, sulfonated acid, methane sulfonic acid, or p-tolylsulfonic acid (p-toluenesulfonic acid). Turning to step S140, the butyraldehyde may also be optionally used to assist in forming the PVB reaction mixture and to create the equilibrated PVB. As will be described in more detail below, the inventors have found that the amount of butyraldehyde used in the PVB recovery processes 100 and/or 100' may affect the residual PVOH content of the resulting, equilibrated PVB. As such, embodiments of the present invention include the feature of adjusting the amount of butyraldehyde used in the PVB recovery processes 100 and/or 100' so as to precisely control the amount of residual PVOH of the resulting, equilibrated PVB.

When the above-described materials are added to the mixing tank 12 (i.e., the PVB feed composition, the solvent, the catalyst, and, optionally, butyraldehyde), the mixing tank 12 may combine, mix, and/or agitate the materials so as to form the PVB reaction mixture. In some embodiments, the mixing tank 12 may also be configured to apply heat to the materials added into the mixing tank 12. Upon adding the catalyst and butyraldehyde, the PVB reaction mixture may comprise about 15 to 25 wt.% PVB material (or from 17 wt.% to 23 wt. %, or from 18 wt.% to 22 wt. %, or about 20 wt.% PVB material), about 75 to 85 wt.% solvent (or from 77 wt.% to 83 wt.%, or from 78 wt.% to 82 wt.%, or about 80 wt.% solvent), about 1 wt.% butyraldehyde (or from 0.25 wt.% to 2.0 wt.%, or from 0.5 wt.% to 1.5 wt.%, or from 0.75 wt.% to 1.25 wt.% butyraldehyde), about 0.3 wt.% water (or from 0.1 wt.% to 0.5 wt.% or from 0.2 wt.% to 0.4 wt.% water), and/or about 0.05 wt.% catalyst. However, as noted above and as discussed in more detail below, the amount of butyraldehyde used in the PVB recovery processes 100 and/or 100' may be adjusted as required to achieve a target residual PVOH content of the resulting, equilibrated PVB.

In step S150, the PVB reaction mixture may be transferred to the holding tank 14 to facilitate equilibration of individual PVB-containing compositions within the PVB feed composition (now in the form of the PVB reaction mixture). In more detail, the PVB reaction mixture may be heated for a period of time. The mixture may be heated to a temperature of between 65°C and 85°C, between 70°C and 80°C, between 70°C and 78°C, or about 78°C. The period of time of heating may be at least 1 hour, at least 2 hours, at least 3 hours, and/or between 1 and 5 hours, between 2 and 4 hours, or about 3 hours. The heating, catalyst, and butyraldehyde permit the PVB reaction mixture to equilibrate the various PVB-containing compositions of the PVB feed composition into a uniform composition. For instance, the PVB reaction mixture will equilibrate such that the PVB portion of the mixture will reach a uniform residual PVOH content.

Turning to step S160 of the PVB recovery process 100, the equilibrated PVB reaction mixture is transferred to the filtering tank 16, where the mixture can be cooled and filtered to remove salt and other impurities. In some embodiments, the PVB reaction mixture may be cooled to a temperature below the temperature to which the mixture was heated in step S150. In some embodiments, a base will be added to the equilibrated PVB reaction mixture to neutralize the mixture before filtering. In some embodiments, the base may comprise potassium hydroxide ("KOH"), sodium hydroxide, or the like. In some embodiments, the amount of base added to the mixture may comprise about 0.05 wt.% of the mixture. In some specific embodiments, the amount of base may be at least 0.02 wt.%, at least 0.03 wt.%, at least 0.04 wt.%, at least 0.05 wt. %, at least 0.06 wt. %, at least 0.07 wt. %, at least 0.08 wt.% of the equilibrated PVB reaction mixture. In other embodiments, the base may form from 0.02 wt.% to 0.08 wt.%, from 0.03 wt.% to 0.07 wt.%, from 0.04 wt.% to 0.06 wt.%, or about 0.05 wt.% of the equilibrated PVB reaction mixture. Regardless, embodiments may provide for a sufficient amount of base to be added such that the pH of the equilibrated PVB reaction mixture (which is about 2.0 to 2.5 before neutralization) reaches from about 5.0 to about 7.0, or at least about 5, 5.1, 5.2, 5.3, 5.4, 5.5, 5.6, 5.7, 5.8, 5.9, 6.0, 6.1, 6.2, 6.3, 6.4, 6.5, 6.5, 6.7, 6.8, 6.9 or 7.0, or about 5.1 to about 6.9, or about 5.2 to about 6.8, or about 5.3 to about 6.7, or about 5.4 to about 6.7, or about 5.5 to about 6.7, or about 5.6 to about 6.7, or about 5.7 to about 6.7, or about 5.8 to about 6.7, or about 5.9 to about 6.7.

The step S160 may further comprise centrifuging and filtering the equilibrated PVB reaction mixture (e.g., neutralized as described above) to remove salts and other solids from the mixture. In some embodiments, the filter may comprise a screen, mesh, cloth, or other similar filtering element. The filtered, equilibrated PVB reaction mixture may, in step S170, be provided to the solvent column 18, where the solvent may be extracted (e.g., via evaporative distillation, water-vapor stripping, extrusion evaporation, or the like). In certain embodiments, the solvent may be reused in the PVB recovery process 100 by being added back into the mixing tank 12 from the solvent column 18. With the solvent and catalyst removed, the remaining solids comprise solid, equilibrated PVB, which may be provided to the extruder 20 (e.g., for use in the formation of polymer interlayers).

Alternatively, as provided in the PVB recovery process 100', after the PVB reaction mixture has been equilibrated (so as to form a uniform PVB composition) within the holding tank 14, the equilibrated PVB reaction mixture may be transferred to the precipitation tank 22, where solid PVB may be precipitated out of the equilibrated PVB reaction mixture, as provided in step S160'. In some embodiments, the equilibrated PVB reaction mixture may be neutralized with the base prior to, during, or after precipitation. The resulting solid, equilibrated PVB may be transferred from the precipitation tank 22 to the wash tank 24 for removing salts and other impurities, as provided in step S170'. In addition, the solvent may be recovered from the wash tank 24 and re-introduced to the mixing tank 12 (e.g., via the solvent column 18) as was previously described. Specifically, the solvent may be removed from the wash tank 24 to the solvent column 18 (e.g., via evaporative distillation, water-vapor stripping, extrusion evaporation, or the like).

From the wash tank 24, the solid, equilibrated PVB may be transferred to a drying tank 26 where any remaining water and other fluids can be removed. The resulting product is a recovered PVB polymer (which has been equilibrated so as to have a uniform residual PVOH content), which can be provided to the extruder 20, so as to be used in an extrusion process to form various PVB products, such as in the manufacture of polymer interlayers and/or laminated glass panels comprising polymer interlayers, or to be used in a resin manufacturing process and re-acetalized to form PVB resin. The recovered PVB may also be used in other applications, such as adhesives that can be formed with the recovered PVB, as well as flooring, ceramic compositions, binders, coatings, inks, dispersions, and other applications.

In certain embodiments, variations, additions, and/or subtractions may be made to the steps S110 to S170 of process 100 (or steps S110 to S170' of process 100') described above. Additionally, the recovered PVB polymer may be subjected to further treatment, as required for particular end uses.

The PVB that is recovered using the PVB recovery processes 100 and/or 100' described above may be used to form a resin, resin layer, polymer interlayer and/or a laminated glass panel comprising a polymer interlayer. The terms "polymer interlayer sheet," "interlayer," "polymer layer", and "polymer melt sheet" as used herein, may designate a single-layer sheet or a multilayered interlayer. A "single-layer sheet," as the name implies, is a single polymer layer extruded as one layer. A multilayered interlayer, on the other hand, may comprise multiple layers, including separately extruded layers, co-extruded layers, or any combination of separately and co-extruded layers. Thus, the multilayered interlayer could comprise, for example: two or more single-layer sheets combined together ("plural-layer sheet"); two or more layers co-extruded together ("co-extruded sheet"); two or more co-extruded sheets combined together; a combination of at least one single-layer sheet and at least one co-extruded sheet; and a combination of at least one plural-layer sheet and at least one co-extruded sheet. In various embodiments of the present invention, a multilayered interlayer comprises at least two polymer layers (e.g., a single layer or multiple layers co-extruded) disposed in direct contact with each other, wherein each layer comprises a polymer resin. The term "resin," as utilized herein refers to the polymeric component (e.g., PVB) removed from the mixture that results from the acid catalysis and subsequent neutralization of polymeric precursors. Generally, plasticizer, such as those discussed more above, will be added to the resins to result in a plasticized polymer. Additionally, resins may have other components in addition to the polymer and plasticizer including; e.g., acetates, salts, and alcohols.

Although the above described steps of the PVB recovery process 100 can be performed to yield recovered PVB with at least some inherent plasticizer (e.g., 3 to 5 phr of plasticizer, 10 to 20 phr of plasticizer, 35 to 45 phr of plasticizer, or various other amounts of plasticizer), embodiments may require additional plasticizer to be added to the PVB before the PVB is used to form a polymer interlayer and/or a laminated glass panel comprising a polymer interlayer. For example, in some embodiments, an additional amount of from 25 to 50 phr, 25 to 45 phr, 30 to 40 phr, or 33 to 35 phr may be added to the resulting PVB before the polymer interlayer and/or the laminated glass panel is manufactured. In other embodiments, an additional amount of less than 25 phr, or less than 20 phr or less, or greater than 50 phr, or greater than 55 phr, or greater than 60 phr, or greater than 65 phr, or greater than 70 phr or more may be added to the resulting PVB before the polymer interlayer and/or the laminated glass panel is manufactured. Higher or lower amounts of plasticizer may be added as desired, depending on the desired properties and application. The recovered PVB resin (or resins) typically has a molecular weight of greater than 30,000 Daltons, or less than 500,000 Daltons, or from about 30,000 to about 500,000 Daltons, or from about 100,000 to about 400,000 Daltons, or from 100,000 to about 175,000 Daltons, or from about 200,000 to about 250,000 Daltons or from about 250,000 to about 350,000 Daltons.

Once a sufficient amount of plasticizer is added to the recovered PVB, it is contemplated that polymer interlayer sheets may be produced by any suitable process known to one of ordinary skill in the art of producing polymer interlayer sheets that are capable of being used in a multiple layer panel (such as a glass laminate). For example, it is contemplated that the polymer interlayer sheets may be formed through solution casting, compression molding, injection molding, melt extrusion, melt blowing or any other procedures for the production and manufacturing of a polymer interlayer sheet known to those of ordinary skill in the art. Further, in embodiments where multiple polymer interlayers are utilized, it is contemplated that these multiple polymer interlayers may be formed through co-extrusion, blown film, dip coating, solution coating, blade, paddle, air-knife, printing, powder coating, spray coating or other processes known to those of ordinary skill in the art. While all methods for the production of polymer interlayer sheets known to one of ordinary skill in the art are contemplated as possible methods for producing the polymer interlayer sheets described herein, this application will focus on polymer interlayer sheets produced through extrusion and/or co-extrusion processes.

In the extrusion process, thermoplastic resin and plasticizers, including any of those resins and plasticizers described above, are generally pre-mixed and fed into an extruder device. Additives such as colorants and UV inhibitors (in liquid, powder, or pellet form) may be used and can be mixed into the thermoplastic resin or plasticizer prior to arriving in the extruder device. These additives are incorporated into the thermoplastic polymer resin, and by extension the resultant polymer interlayer sheet, to enhance certain properties of the polymer interlayer sheet and its performance in the final multiple layer glass panel product.

In the extruder device, the particles of the thermoplastic raw material and plasticizers, including any of those resins, plasticizers, and other additives described above, are further mixed and melted, resulting in a melt that is generally uniform in temperature and composition. Embodiments of the present invention may provide for the melt temperature to be approximately 200°C. Once the melt reaches the end of the extruder device, the melt is propelled into the extruder die. The extruder die is the component of the extruder device which gives the final polymer interlayer sheet product its profile. The die will generally have an opening, defined by a lip, that is substantially greater in one dimension than in a perpendicular dimension. Generally, the die is designed such that the melt evenly flows from a cylindrical profile coming out of the die and into the product's end profile shape. A plurality of shapes can be imparted to the end polymer interlayer sheet by the die so long as a continuous profile is present. Generally, in its most basic sense, extrusion is a process used to create objects of a fixed cross-sectional profile. This is accomplished by pushing or drawing a material through a die of the desired cross-section for the end product.

In some embodiments, a co-extrusion process may be utilized. Co-extrusion is a process by which multiple layers of polymer material are extruded simultaneously. Generally, this type of extrusion utilizes two or more extruders to melt and deliver a steady volume throughput of different thermoplastic melts of different viscosities or other properties through a co-extrusion die into the desired final form. For example, the multiple layer interlayers of the present invention (e.g., in the form of a trilayer interlayer) may be preferably co-extruded using a multiple manifold co-extrusion device which includes a first die manifold, a second die manifold, and a third die manifold. The co-extrusion device may operate by simultaneously extruding polymer melts from each manifold through a die and out of an opening, where the multiple layer interlayer is extruded as a composite of three individual polymer layers. The polymer melts may flow through the die such that the core layer is positioned between the skin layers, so as to result in the manufacture of a trilayer interlayer with the core layer sandwiched between the skin layers. The die opening may include a pair of lips positioned on either side of the opening. Given the positional orientation of the polymer melts, the skin layers may come into contact with the lips. Regardless, the interlayer thickness can be varied by adjusting the distance between die lips located at the die opening.

Often, polymer interlayers having three layers will be used in the manufacture of a laminated glass panel. For example, in some embodiments of this application, the increased acoustic attenuation properties of soft layers are combined with the mechanical strength of stiff/rigid layers to create a multilayered interlayer. In these embodiments, a central soft layer is sandwiched between two stiff/rigid outer layers. This configuration of (stiff)//(soft)//(stiff) creates a multilayered interlayer that is easily handled, can be used in conventional lamination methods and that can be constructed with layers that are relatively thin and light. The soft, core layer is generally characterized by a lower residual hydroxyl content, a higher plasticizer content, and/or a lower glass transition temperature than the relatively stiffer, skin layers.

The following offers a simplified description of the manner in which multiple layer glass panels are generally produced in combination with the interlayers formed according to the processes described above. First, as discussed above, a multiple layer interlayer may be co-extruded using a multiple manifold co-extrusion device. The device operates by simultaneously extruding polymer melts from each manifold toward an extrusion opening. Properties of the layers can be varied by adjusting attributes (e.g., temperature and/or opening dimensions) of the die lips at the extrusion opening. Once formed, the interlayer sheet can be placed between two glass substrates and any excess interlayer is trimmed from the edges, creating an assembly. It is not uncommon for multiple polymer interlayer sheets or a polymer interlayer sheet with multiple layers (or a combination of both) to be placed within the two glass substrates creating a multiple layer glass panel with multiple polymer interlayers. Then, air is removed from the assembly by an applicable process or method known to one of skill in the art; e.g., through nip rollers, vacuum bag or another deairing mechanism. Additionally, the interlayer is partially press-bonded to the substrates by any method known to one of ordinary skill in the art. In a last step, in order to form a final unitary structure, this preliminary bonding is rendered more permanent by a high temperature and pressure lamination process, or any other method known to one of ordinary skill in the art such as, but not limited to, autoclaving.

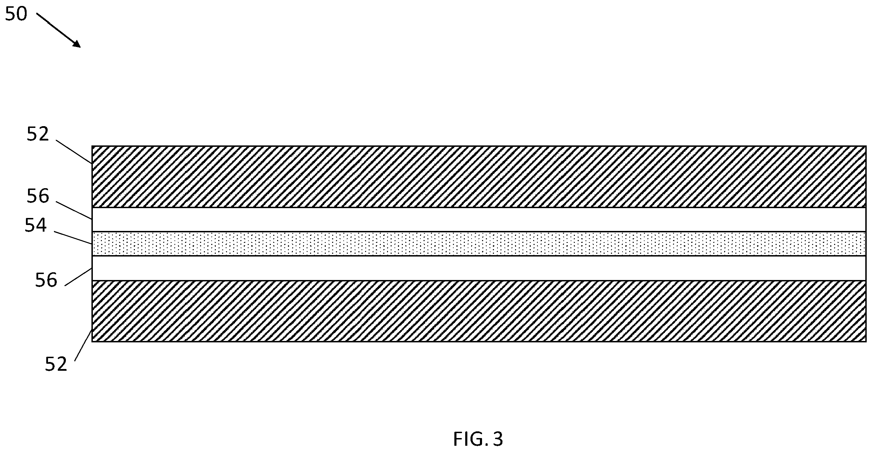

In view of the above, multiple layer panels may be comprised of two sheets of glass, or other applicable substrates, with a polymer interlayer sheet or sheets sandwiched therebetween. Multiple layer panels are generally produced by placing at least one polymer interlayer sheet between two substrates to create an assembly. FIG. 3 illustrates a multiple layer panel 50 comprising a pair of glass sheets 52 with a multilayered interlayer sandwiched therebetween. The multilayered interlayer is configured as an acoustic trilayer interlayer having three individual polymer interlayer sheets, including a soft core layer 54 and two relatively stiffer skin layers 56 positioned on either side of the core layer 54. Such glass panels that incorporate such a trilayer may, as discussed above, have superior acoustic properties due to the sound dampening provided by the soft, core layer.

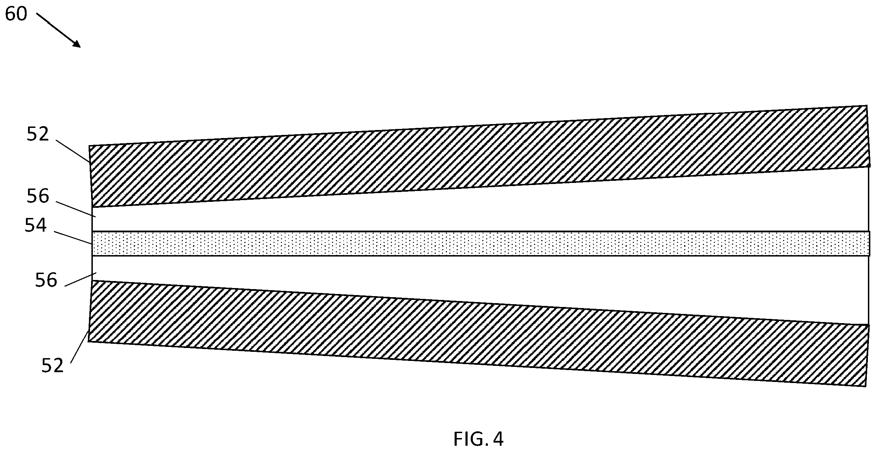

In some embodiments, the interlayer (e.g., the core layer 54 and the skin layers 56) will have a generally constant or uniform thickness about the length of the interlayer (see, e.g., FIG. 3). However, in alternative embodiments, as shown in a multiple layer panel 60 of FIG. 4, the interlayer may have at least one region of non-uniform thickness. For example, the interlayer, comprised of the core layer 54 and skin layers 56, may be wedge-shaped, such that the thickness of the interlayer changes (e.g., linearly) about the length of the interlayer. In some such embodiments, the thickness of the interlayer may change due to a thickness change in the core layer 54 (i.e., with the skin layers 56 having a generally constant thickness). Alternatively, the thickness of the interlayer may change due to a thickness change in the skin layers 56 (i.e., with the core layer 54 having a generally constant thickness). In further alternatives, the thickness of the interlayer may change due to a thickness change in both the core layer 54 and the skin layers 56. In further embodiments (not shown), one or more layers may increase in thickness in the cross machine direction of the interlayer while one or more layers are concurrently reduced in thickness, while maintaining an interlayer having at least one region of non-uniform thickness, such as a wedge-shaped interlayer. Such glass panels that incorporate such a trilayer may, as discussed above, have superior acoustic properties due to the sound dampening provided by the soft, core layer. In addition, due to the non-uniform thickness of the trilayer, the glass panels may provide beneficial characteristics for use in heads-up displays ("HUDs") by reducing unwanted image projection defects (e.g., reducing ghost images).

Beneficially, laminated glass panels formed with at least one polymer layer/interlayer containing the recovered PVB, obtained from the PVB recovery processes 100 and/or 100' discussed above, may have superior optical qualities. Such qualities are generally due to the recovered PVB being equilibrated so as to have a uniform residual PVOH content. For example, when the recovered PVB (i.e., the equilibrated PVB-containing composition) is mixed with 20 phr of plasticizer to form a PVB resin, and the PVB resin is formed into a 0.772 mm PVB layer and positioned between two 2.3 mm sheets of glass to form a laminated glass panel, the laminated glass panel may have a haze of less than 5%, less than 2%, less than 1%, less than 0.5%, or less than 0.25%. Haze is a percentage of transmitted light that is scattered so that its direction deviates more than a specified angle from the direction of the incident beam. Haze may be measured using a haze meter or a spectrophotometer, known to one of skill in the art, and in accordance with ASTM D1003-Procedure B using Illuminant C, at an observer angle of 2 degrees.

However, it can be difficult to produce polymer layers/interlayers with the necessary residual PVOH content to be formed into specific layers of polymer interlayers. For instance, as was noted above, for acoustic trilayer interlayers, the soft, core layer is generally characterized by a lower residual PVOH content, whereas the relatively stiffer, skin layers are generally characterized by a higher residual PVOH content. Given that the PVB feed composition used in the PVB recovery processes 100 and/or 100' may comprise multiple different PVB-containing compositions, the recovered PVB (after being recycled through the PVB recovery processes 100 and/or 100' described above) may be formed with various levels of residual PVOH content, which may not be suitable for use as skin layers or as core layers in a trilayer interlayer. However, the inventors have discovered that by controlling the amount of butyraldehyde used in the PVB recovery processes 100 and/or 100', the residual PVOH content of the recovered PVB can be precisely controlled. For example, by increasing the amount of butyraldehyde used in the PVB recovery processes 100 and/or 100', the residual PVOH content of the recovered PVB can be reduced, whereas by decreasing the amount of butyraldehyde used in the PVB recovery processes 100 and/or 100', the residual PVOH content of the recovered PVB can be increased.

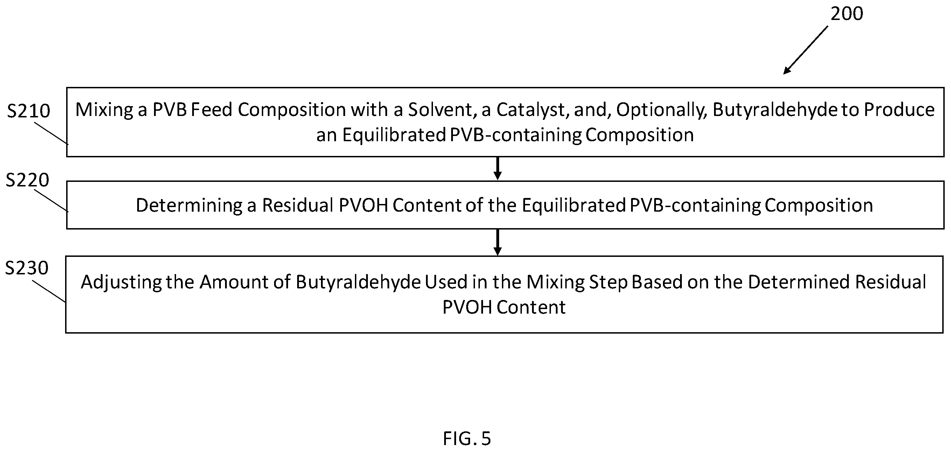

In view of the above, as illustrated in FIG. 5, embodiments of the present invention include a further PVB recovery process 200 for controlling the amount of residual PVOH content of recovered PVB. The process 200 comprises an initial step S210 of mixing a PVB feed composition with a solvent, a catalyst, and, optionally, butyraldehyde to produce an equilibrated PVB-containing composition. In some embodiments, the PVB feed composition comprises at least two different PVB-containing compositions. An additional step S220 includes determining a residual PVOH content of the equilibrated PVB-containing composition. A further step S230 includes adjusting the amount of butyraldehyde used in the mixing step S210 based on the determined residual PVOH content.

In more detail, the PVB feed composition may be mixed, as provided in step 210, with the solvent, catalyst, and, optionally, butyraldehyde within the mixing tank 12 and/or the holding tank 14 of the reclamation system 10, as previously described with respect to the PVB recovery processes 100 and/or 100', to produce an equilibrated PVB-containing composition. As was also previously noted, the PVB feed composition may comprises at least two different PVB-containing compositions, such as a first PVB-containing composition having a different residual PVOH content than a second PVB-containing composition. Nevertheless, once the PVB feed composition has been equilibrated, the residual PVOH content of the equilibrated PVB-containing composition may be uniform and may be determined, as provided in step S220.

In some embodiments, the residual PVOH content may be determined when the equilibrated PVB-containing composition is in solution form, such as when the equilibrated PVB-containing composition is within the holding tank 14, the filtering tank 16, and/or the precipitation tank 22. In some embodiments, the residual PVOH content of the equilibrated PVB-containing composition in solution form may be tested by cloud point measurement. Such cloud point measurement may be performed on samples of the equilibrated PVB-containing composition solution extracted from the holding tank 14, the filtering tank 16, and/or the precipitation tank 22. Alternatively, the cloud point measurement may be performed directly on the equilibrated PVB-containing composition solution within the holding tank 14, the filtering tank 16, and/or the precipitation tank 22.

In other embodiments, the residual PVOH content may be determined when the equilibrated PVB-containing composition is in solid or resin form, such as when solid PVB has been obtained from the equilibrated PVB reaction mixture within the solvent column 18, within the precipitation tank 22 (e.g., after precipitation), within the wash tank 24 (e.g., after evaporation), within the drying tank 26, and/or otherwise after the recovered PVB has been formed into a resin for introduction into the extruder 20. In some embodiments, the residual PVOH content of the equilibrated PVB-containing composition in solid or resin form may be tested by an infrared sensor and/or by titration. Such testing may be performed on samples of the equilibrated PVB-containing composition (in solid or resin form) extracted from the solvent column 18, from the precipitation tank 22, from the wash tank 24 from the drying tank 26, and/or otherwise prior to introduction into the extruder 20. Alternatively, the testing may be performed directly on the equilibrated PVB-containing composition (in solid or resin form) within the solvent column 18, within the precipitation tank 22, within the wash tank 24, within the drying tank 26, and/or within feed lines supplying the PVB resin to the extruder 20.

Based on the measured residual PVOH content of the equilibrated PVB, embodiments provide for the residual PVOH content to be adjusted. As noted above, the inventors have found that by increasing the amount of butyraldehyde used in the PVB recovery processes 100 and/or 100', the residual PVOH content of the recovered PVB can be reduced, whereas by decreasing the amount of butyraldehyde used in the PVB recovery processes 100 and/or 100', the residual PVOH content of the recovered PVB can be increased. Thus, a target residual PVOH content of the equilibrated PVB can be established, and the amount of butyraldehyde used in the PVB recovery processes 100 and/or 100' can be adjusted to achieve such target.

In some embodiments, the target residual PVOH content of the equilibrated PVB may be set from 14 to 50 wt.%, from 15 to 25 wt.%, from 16 to 22 wt.%, or from 18.0 to 20.0 wt.%. Such a target may be used, for example, for embodiments in which the equilibrated PVB is to be formed into a resin used in skin layers of an acoustic trilayer. In other embodiments, the target residual PVOH content of the equilibrated PVB may be set from 5 to 15 wt.%, from 7 to 13 wt.%, or from 9 to 11 wt.%. Such a target may be used, for example, for embodiments in which the equilibrated PVB is to be formed into a resin used in a core layer of an acoustic trilayer.

The amount of butyraldehyde used in the PVB recovery process 100 can be adjusted by modifying the amount of butyraldehyde used in the mixing tank 12. For example, in situations where the residual PVOH content of the equilibrated PVB, e.g., as recovered from the PVB recovery process 100, is greater than the target, the amount of butyraldehyde used in the mixing tank 12 may be increased (i.e., butyraldehyde is added to the mixing tank 12 from the solvent column 18 or from a fresh butyraldehyde source). In contrast, in situations where the residual PVOH content of the equilibrated PVB, e.g., as recovered from the PVB recovery processes 100 and/or 100', is less than the target, the amount of butyraldehyde used in the mixing tank 12 may be decreased (i.e., butyraldehyde may be extracted from the mixing tank 12).

In some embodiments, one or more of (i) the determination of residual PVOH content of the equilibrated PVB, (ii) the comparison with the target residual PVOH content, and (iii) the adjustment of the amount butyraldehyde used in the PVB recovery process may be automated. For example, embodiments may include a control system (e.g., including memory elements, processing elements, and/or input/output elements) for automatically (i) determining the residual PVOH content of the equilibrated PVB within the PVB recovery process, (ii) comparing the determined residual PVOH content with a target residual PVOH content, and (iii) automatically adjusting the amount of butyraldehyde amount used in the PVB recovery process. As such, the control system may be part of the reclamation systems 10 and/or 10', and may be in communication with testing equipment (e.g., sensors) that perform the testing (e.g., cloud point, infrared, titration testing) of the residual PVOH content of the equilibrated PVB within the systems 10 and/or 10'. Upon receiving data indicative of the residual PVOH content of the equilibrated PVB, the control system may compare such data with the target residual PVOH content that is established and stored within the control system. Based on such a comparison, the control system may automatically adjust the amount of butyraldehyde used in the PVB recovery process (e.g., the amount used in the mixing tank 12 of the systems 10 and/or 10'). The control system may perform such steps based on the processing elements performing computer-implemented instructions stored on the memory elements (e.g., non-transitory computer readable storage media) of the control system.

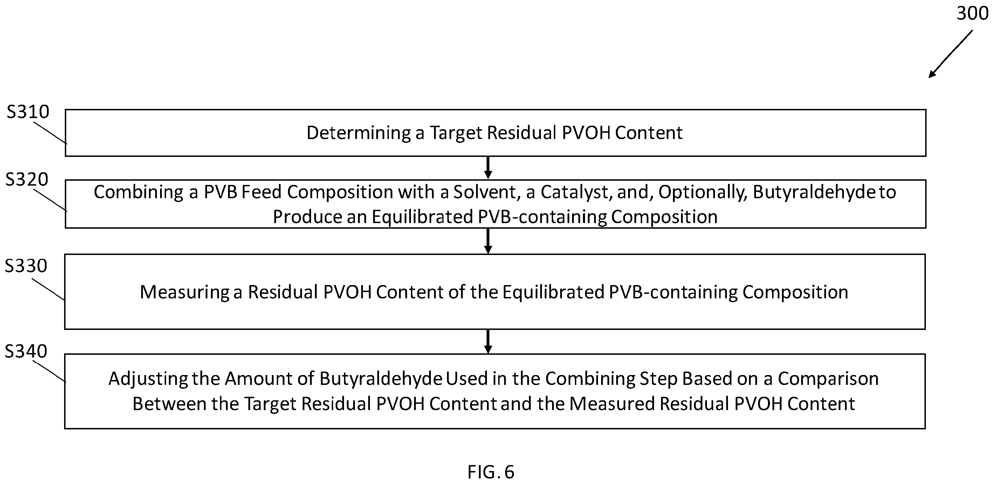

In view of the above, embodiments provide another process 300, as illustrated in FIG. 6, of recovering PVB. The process 300 comprises a step 310 of determining a target residual PVOH content. An additional step 320 includes combining a PVB feed composition with a solvent, a catalyst, and, optionally, butyraldehyde to produce an equilibrated PVB-containing composition. The PVB feed composition may comprises at least two different PVB-containing compositions. An additional step 330 includes measuring a residual PVOH content of the equilibrated PVB-containing composition. A further step 340 includes adjusting the amount of butyraldehyde used in the combining step 310 based on a comparison between the target residual PVOH content and the measured residual PVOH content.

As a further benefit, the recovered PVB obtained from the PVB recovery processes 100 and/or 100' discussed above, may be formed with preferred molecular weight values for use in acoustic trilayer interlayers. In more detail, the inventors have found that recovered PVB obtained from the PVB recovery processes 100 and/or 100' can have a reduced molecular weight with respect to the PVB feed composition fed into the process. In some instances, the PVB feed composition may comprise recycle PVB formed from acoustic trilayer interlayers. Such acoustic trilayer interlayers may comprise a combination of skin layers and core layers, with the core layers generally having higher molecular weights than the skin layers. If the recovered PVB is to be used in the skin layers of new acoustic trilayer interlayers, then the molecular weight of the recovered PVB is generally required to be less than the PVB feed composition. Beneficially, the PVB recovery processes 100 and/or 100' provides for the recovered PVB to have a reduced molecular weight with respect to the PVB feed composition due to the steps of the PVB recovery process 100 unwinding, dissolving, and/or breaking the interchain linkages of the PVB feed composition. A further benefit of the recovered PVB having a reduced molecular weight (with respect to the PVB feed composition) is that the recovered PVB also has a lower viscosity (with respect to the PVB feed composition), which improves flow of the PVB resin through the extruder and/or the autoclave.

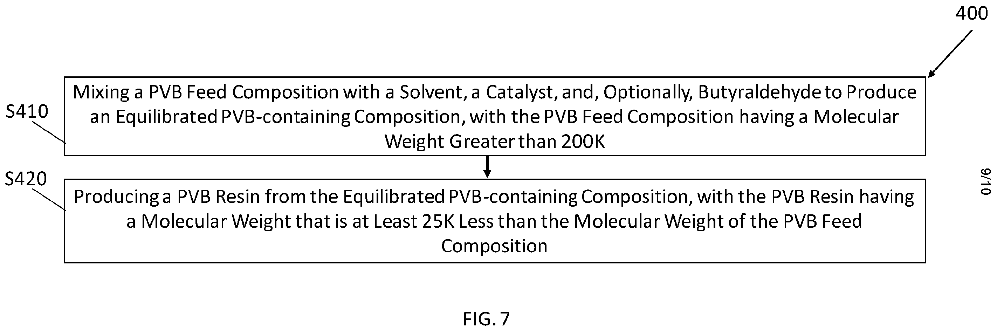

In view of the above, embodiments of the present invention provide another process 400, as illustrated in FIG. 7, for recovering PVB. The process 400 includes an initial step S410 of mixing a PVB feed composition with a solvent, a catalyst, and, optionally, butyraldehyde to produce an equilibrated PVB-containing composition, with the PVB feed composition having a molecular weight greater than 200,000 (200K) Daltons. In other embodiments, the PVB feed composition may have a molecular weight of greater than 225K, greater than 250K, greater than 275K, and/or greater than 300K Daltons. In addition, the PVB feed composition may have a viscosity of greater than 230 cps. An additional step S420 may comprise producing a PVB resin from the equilibrated PVB-containing composition, with the PVB resin having a molecular weight that is at least 25K less than the molecular weight of the PVB feed composition. In other embodiments, the PVB resin may have a molecular weight that is at least 30K, at least 40K, at least 50K, at least 60K, at least 70K, at least 80K, at least 90K, or at least 100K Daltons less than the molecular weight of the PVB feed composition. Furthermore, the PVB resin may have a viscosity at least 10 cps, at least 15 cps, and/or at least 20 cps less than the viscosity of the PVB feed composition. Alternatively, or in addition, the PVB resin may have a viscosity at least 10%, at least 15%, at least 20%, or between 10 and 20% less than the viscosity of the PVB feed composition. For example, the PVB resin may have a viscosity of less than 230 cps, less than 220 cps, less than 210 cps, and/or less than 200 cps.

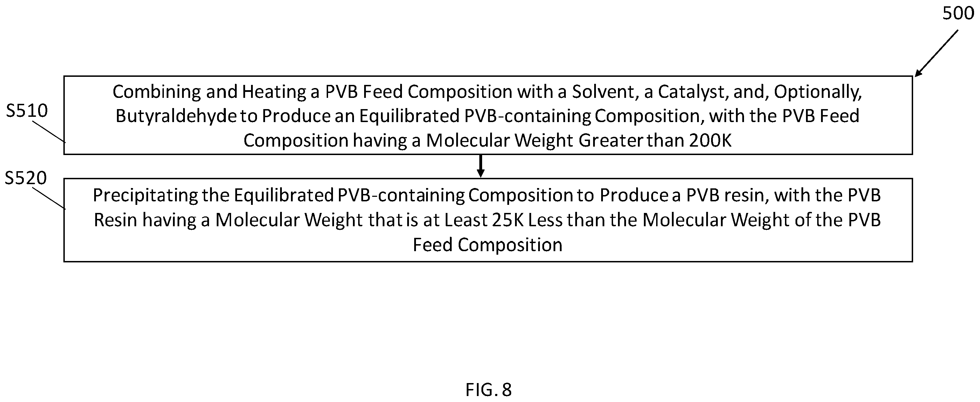

Finally, embodiments of the present invention may provide another process 500, as illustrated in FIG. 8, for recovering PVB. The process 500 includes an initial step S510 of combining and heating a PVB feed composition with a solvent, a catalyst, and, optionally, butyraldehyde to produce an equilibrated PVB-containing composition, with the PVB feed composition having a molecular weight greater than 200K Daltons. An additional step S520 may comprise precipitating the equilibrated PVB-containing composition to produce a PVB resin, with the PVB resin having a molecular weight that is at least 25K less than the molecular weight of the PVB feed composition.

### Example 1

A mixture of 850 parts of SD29 alcohol (190 proof ethanol), 150 parts of PVB resin having a PVOH content of 10.50 wt.% (referred to herein as the "starting PVB resin"), 3 parts water, and 0.4 parts sulfuric acid were charged within a one liter three-neck jacketed glass reactor. The mixture was stirred and heated to 78°C, where the mixture was held for four hours. The resulting mixture was cooled to 65°C and neutralized with 0.46 part of KOH until the mixture reached a pH of 6. The resulting cloudy mixture was further mixed with 8 equivalents of water in a high intensity mixer to form a PVB slurry. Alcohol and residual butyraldehyde were removed from the PVB slurry with fill and drain washing with deionized water, and the resulting slurry was filtered and dried. After drying, 134 parts of "recovered PVB resin" was obtained. The recovered PVB resin had a PVOH content of 18.38 wt.%, as measured using a Bomem MB160 FT-(near infrared) NIR Analyzer. It is noted that the Bomem MB160 FT-NIR Analyzer was calibrated using a sample PVB resin with a known residual PVOH content determined using titration.

In addition, each of the starting PVB resin and the recovered PVB resin underwent viscosity measurements according to the following "viscosity test." To begin, 50 ml of 92 wt.% isopropanol in deionized water at 20°C was pipetted into a 4 oz. test bottle. A sample of the resin, measuring 1.9084 gm, was added to the test bottle and shaken vigorously for 30 minutes. The test bottle was placed in a 45°C bath for at least 60 minutes. The test bottle was removed from the bath and was again shaken until complete solution was achieved. The test bottle was then placed in a 20°C bath for 60 minutes. A viscometer tube was placed in the 20°C bath for approximately 5 minutes to equilibrate. 10 ml of the solution was transferred from the test bottle to the viscometer tube (e.g., Cannon Fenske Viscometer No. 400) using a fast flow pipette. A pressure bulb was used to press the fluid to the upper mark of the viscometer. The pressure was released to allow the liquid level to flow past the upper mark of the viscometer. A timer was used to calculate the time for the liquid in the viscometer to pass between the upper and a lower mark. Viscosity, in centistokes, was determined by multiplying the measured time by a tube factor associated with the viscometer. Viscosity, in centipoise, was determined by multiplying the viscosity, in centistokes, by the solution density in gm/cc. Using the viscosity test, the starting PVB resin was determined to have a viscosity of 234 cps, while the viscosity of the recovered PVB resin was found to have been reduced to 213 cps.

Furthermore, the molecular weights of the starting PVB resin and the recovered PVB resin were measured using the "molecular weight test" described below. It was found that the starting PVB resin had a molecular weight of 273,031 Daltons, while the viscosity of the recovered PVB resin had reduced a molecular weight of 245,203 Daltons. In more detail, the molecular weight test comprises gel permeation chromatography ("GPC"), whereby hexafluoroisopropanol AR from Biosolve was used as the GPC mobile phase (0.8ml/min). Each sample was prepared by weighing approximately 20 mg of the PVB resin into a 25 ml flask, and adding 10 ml of the mobile phase. The flasks were then placed in an automated shaking device until the PVB resin was fully dissolved. Analyses were performed on a three-detector system consisting of a Viscotek GPCmax (autosampler, pump, and degasser), a Viscotek triple detector TDA302 (RALL/LALLS, Viscometer, and DRI combination) with column oven. The separation was performed by three Viscotek mixed bed columns type I-MB (low, medium and high range molecular weight) maintained at 45°C. The complete detector set-up was calibrated using a narrow PMMA standard from Viscotek with a reported molecular weight of 64,368 Daltons, an intrinsic viscosity of 0.615 and a dn/dc value of 0.189. The refractive index of the mobile phase was determined to be 1,2649g/ml through prior experimentation.

### Example 2

A mixture of 800 parts of SD29 alcohol (190 proof ethanol), 200 parts of recycle PVB resin formed from acoustic trilayer interlayers (having skin layers with a PVOH content of 10.50 wt.% and core layers with a PVOH content of 18.70 wt.%), 3 parts water, and 0.5 parts sulfuric acid were charged within a one liter three-neck jacketed glass reactor. The mixture was stirred and heated to 78°C, where the mixture was held for four hours. The resulting mixture was cooled to 65°C and neutralized with 0.46 part of KOH until the mixture reached a pH of 6. The resulting cloudy mixture was filtered to yield a clear viscous solution. The solution was cast into a film and allowed to dry to result in a clear film. The film was pressed into a 0.772 mm thick film of recovered PVB resin. The recovered PVB resin was found to have a PVOH content of 23.08 wt.% using the Bomem MB160 FT-NIR Analyzer described above.

### Example 3

A mixture of 800 parts of SD29 alcohol, 200 parts of recycle PVB formed from acoustic trilayer interlayers (having skin layers with a PVOH content of 10.50 wt.% and core layers with a PVOH content of 18.70 wt.%), 15 parts butyraldehyde, 3 parts water, and 0.5 parts sulfuric acid were charged within a one liter three-neck jacketed glass reactor. The mixture was stirred and heated to 78°C, where the mixture was held for four hours. The resulting mixture was cooled to 65°C and neutralized with 0.46 part of KOH until the mixture reached a pH of 6. The resulting cloudy mixture was filtered to yield a clear viscous solution. The solution was cast into a film and allowed to dry to result in a clear film. The film was pressed into a 0.772 mm thick film of recovered PVB resin. The recovered PVB resin was found to have a PVOH content of 18.77 wt.% using the Bomem MB160 FT-NIR Analyzer described above.

## Claims

1. A process for recovering poly(vinyl butyral) (PVB), said process comprising the following steps:
(a) mixing a PVB feed composition with a solvent, a catalyst, and, optionally, butyraldehyde to produce an equilibrated PVB-containing composition, wherein the PVB feed composition comprises at least two different PVB-containing compositions;
(b) determining a residual polyvinyl alcohol (PVOH) content of the equilibrated PVB-containing composition using cloud point measurement or infrared sensor or titration; and
(c) adjusting the amount of butyraldehyde used in said mixing of step (a) based on the residual PVOH content determined in step (b);
the process further including the step of setting a target residual PVOH content for the equilibrated PVB-containing composition;
wherein the at least two different PVB-containing compositions include a first PVB-containing composition and a second PVB-containing composition, with the first PVB-containing composition having a different PVOH content than the second PVB-containing composition, and wherein a relative difference in the residual PVOH content of the first PVB-containing composition and the residual PVOH content of the second PVB-containing composition is between 2 and 10 wt.%, or
wherein the at least two different PVB-containing compositions include a first PVB-containing composition and a second PVB-containing composition, with the first PVB-containing composition having a different aldehyde content than the second PVB-containing composition, or
wherein the at least two different PVB-containing compositions include a first PVB-containing composition and a second PVB-containing composition, with the first PVB-containing composition having a different vinyl acetate content than the second PVB-containing composition, or
wherein the at least two different PVB-containing compositions include a first PVB-containing composition and a second PVB-containing composition, with the first PVB-containing composition having a different plasticizer content than the second PVB-containing composition, or
wherein the at least two different PVB-containing compositions include a first PVB-containing composition and a second PVB-containing composition, with the first PVB-containing composition having a different plasticizer type than the second PVB-containing composition, or
wherein the at least two different PVB-containing compositions include a first PVB-containing composition and a second PVB-containing composition, with the first PVB-containing composition having a different molecular weight than the second PVB-containing composition, or
wherein the at least two different PVB-containing compositions include a first PVB-containing composition and a second PVB-containing composition, with the first PVB-containing composition having different additives than the second PVB-containing composition, wherein the additives are selected from one or more of the following: adhesion control agents, UV stabilizers, anti-oxidants, IR absorbers, and colorants.

2. The process of claim 1, wherein if the residual PVOH content determined in step (b) is greater than the target residual PVOH content, said adjusting of step (c) includes increasing the amount of butyraldehyde used in said mixing of step (a), or wherein if the residual PVOH content determined in step (b) is less than the target residual PVOH content, said adjusting of step (c) includes decreasing the amount of butyraldehyde used in said mixing of step (a), and wherein decreasing the amount of butyraldehyde used in said mixing of step (a) includes extracting butyraldehyde.

3. The process of claim 1 or 2, wherein the equilibrated PVB-containing composition is a solution and said determining of step (b) is performed by cloud point measurement, or the equilibrated PVB-containing composition is a PVB resin and said determining of step (b) is performed using an infrared sensor or by titration.

4. The process of any of claims 1 to 3, wherein said mixing of step (a) includes heating the PVB feed composition, the solvent, the catalyst, and/or the butyraldehyde, or wherein said mixing of step (a) includes agitating the PVB feed composition, the solvent, the catalyst, and/or the butyraldehyde.

5. A process for recovering poly(vinyl butyral) (PVB), said process comprising the following steps:
(a) establishing a target residual polyvinyl alcohol (PVOH) content;
(b) combining a PVB feed composition with a solvent, a catalyst, and, optionally, butyraldehyde to produce an equilibrated PVB-containing composition, wherein the PVB feed composition comprises at least two different PVB-containing compositions;
(c) measuring a residual PVOH content of the equilibrated PVB-containing composition using cloud point measurement or infrared sensor or titration; and
(d) adjusting the amount of butyraldehyde used in said combining of step (b) based on a comparison between the target residual PVOH content and the residual PVOH content measured in step (c);
wherein the at least two different PVB-containing compositions include a first PVB-containing composition and a second PVB-containing composition, with the first PVB-containing composition having a different PVOH content than the second PVB-containing composition, and wherein a relative difference in the residual PVOH content of the first PVB-containing composition and the residual PVOH content of the second PVB-containing composition is between 2 and 10 wt.%, or
wherein the at least two different PVB-containing compositions include a first PVB-containing composition and a second PVB-containing composition, with the first PVB-containing composition having a different aldehyde content than the second PVB-containing composition, or
wherein the at least two different PVB-containing compositions include a first PVB-containing composition and a second PVB-containing composition, with the first PVB-containing composition having a different vinyl acetate content than the second PVB-containing composition, or
wherein the at least two different PVB-containing compositions include a first PVB-containing composition and a second PVB-containing composition, with the first PVB-containing composition having a different plasticizer content than the second PVB-containing composition, or
wherein the at least two different PVB-containing compositions include a first PVB-containing composition and a second PVB-containing composition, with the first PVB-containing composition having a different plasticizer type than the second PVB-containing composition, or
wherein the at least two different PVB-containing compositions include a first PVB-containing composition and a second PVB-containing composition, with the first PVB-containing composition having a different molecular weight than the second PVB-containing composition, or
wherein the at least two different PVB-containing compositions include a first PVB-containing composition and a second PVB-containing composition, with the first PVB-containing composition having different additives than the second PVB-containing composition, wherein the additives are selected from one or more of the following: adhesion control agents, UV stabilizers, anti-oxidants, IR absorbers, and colorants.

6. The process of claim 5, wherein if the residual PVOH content measured in step (c) is greater than the target residual PVOH content established in step (a), said adjusting of step (d) includes increasing the amount of butyraldehyde used in said combining of step (b), or wherein if the residual PVOH content measured in step (c) is less than the target residual PVOH content established in step (a), said adjusting of step (d) includes decreasing the amount of butyraldehyde used in said combining of step (b), and wherein decreasing the amount of butyraldehyde used in said combining of step (b) includes extracting butyraldehyde.

7. The process of claim 5 or 6, wherein the equilibrated PVB-containing composition is a solution and said measuring of step (c) is performed by cloud point measurement, or wherein the equilibrated PVB-containing composition is a PVB resin and said measuring of step (c) is performed using an infrared sensor, or wherein the equilibrated PVB-containing composition is a PVB resin and said measuring of step (c) is performed by titration; or
wherein said combining of step (b) includes heating the PVB feed composition, the solvent, the catalyst, and/or the butyraldehyde, or wherein said combining of step (b) includes agitating the PVB feed composition, the solvent, the catalyst, and/or the butyraldehyde; or
wherein the target residual PVOH content is from 14 to 50 wt.%, from 15 to 25 wt.%, from 16 to 22 wt.%, from 18.0 to 19.0 wt.%, or about 18.7 wt.%.

8. The process of any of claims 1 to 7, wherein when the equilibrated PVB-containing composition is mixed with 20 phr of plasticizer to form a PVB resin, and the PVB resin formed into a 0.772 mm PVB layer and positioned between two 2.3 mm sheets of glass to form a laminated glass panel, the laminated glass panel has a haze of less than 5%, less than 2%, less than 1%, less than 0.5%, or less than 0.25%, haze being measured in accordance with ASTM D1003-Procedure B using Illuminant C, at an observer angle of 2 degrees.

9. A process for recovering poly(vinyl butyral) (PVB), said process comprising the following steps:
(a) mixing a PVB feed composition with a solvent, a catalyst, and, optionally, butyraldehyde to produce an equilibrated PVB-containing composition, wherein the PVB feed composition has a molecular weight greater than 200K Daltons as measured by size exclusion chromatography using low angle laser light scattering;
(b) producing a PVB resin from the equilibrated PVB-containing composition, wherein the PVB resin has a molecular weight that is at least 25K Daltons less than the molecular weight of the PVB feed composition;
wherein the PVB feed composition comprises at least two different PVB-containing compositions including a first PVB-containing composition and a second PVB-containing composition, with the first PVB-containing composition having a different PVB content than the second PVB-containing composition, or
wherein the PVB feed composition comprises at least two different PVB-containing compositions including a first PVB-containing composition and a second PVB-containing composition, with the first PVB-containing composition having a different PVOH content than the second PVB-containing composition, or wherein the PVB feed composition comprises at least two different PVB-containing compositions including a first PVB-containing composition and a second PVB-containing composition, with the first PVB-containing composition having a different vinyl acetate content than the second PVB-containing composition, or
wherein the PVB feed composition comprises at least two different PVB-containing compositions including a first PVB-containing composition and a second PVB-containing composition, with the first PVB-containing composition having a different plasticizer content than the second PVB-containing composition, or
wherein the PVB feed composition comprises at least two different PVB-containing compositions including a first PVB-containing composition and a second PVB-containing composition, with the first PVB-containing composition having a different plasticizer type than the second PVB-containing composition, or
wherein the PVB feed composition comprises at least two different PVB-containing compositions including a first PVB-containing composition and a second PVB-containing composition, with the first PVB-containing composition having a different molecular weight than the second PVB-containing composition, or
wherein the PVB feed composition comprises at least two different PVB-containing compositions including a first PVB-containing composition and a second PVB-containing composition, with the first PVB-containing composition having different additives than the second PVB-containing composition, wherein the additives are selected from one or more of the following: adhesion control agents, UV stabilizers, anti-oxidants, IR absorbers, and colorants, or
wherein when the PVB resin is formed into a 0.772 mm PVB layer and positioned between two 2.3 mm sheets of glass to form a laminated glass panel, the laminated glass panel has a haze of less than 5%, less than 2%, less than 1%, less than 0.5%, or less than 0.25%, haze being measured in accordance with ASTM D1003-Procedure B using Illuminant C, at an observer angle of 2 degrees.

10. The process of claim 9, wherein said mixing of step (a) includes heating the PVB feed composition, the solvent, the catalyst, and/or the butyraldehyde, or wherein said mixing of step (a) includes agitating the PVB feed composition, the solvent, the catalyst, and/or the butyraldehyde, or wherein said producing of step (b) includes precipitating the equilibrated PVB-containing composition to obtain the PVB resin.

11. A process for recovering poly(vinyl butyral) (PVB), said process comprising the following steps:
(a) combining and heating a PVB feed composition, a solvent, a catalyst, and, optionally, butyraldehyde to produce an equilibrated PVB-containing composition, wherein the PVB feed composition has a molecular weight greater than 200K Daltons as measured by size exclusion chromatography using low angle laser light scattering;
(b) precipitating the equilibrated PVB-containing composition to produce a PVB resin, wherein the PVB resin has a molecular weight that is at least 25K less than the molecular weight of the PVB feed composition;
wherein the PVB feed composition comprises at least two different PVB-containing compositions including a first PVB-containing composition and a second PVB-containing composition, with the first PVB-containing composition having a different PVB content than the second PVB-containing composition, or wherein the PVB feed composition comprises at least two different PVB-containing compositions including a first PVB-containing composition and a second PVB-containing composition, with the first PVB-containing composition having a different PVOH content than the second PVB-containing composition, or wherein the PVB feed composition comprises at least two different PVB-containing compositions including a first PVB-containing composition and a second PVB-containing composition, with the first PVB-containing composition having a different vinyl acetate content than the second PVB-containing composition, or
wherein the PVB feed composition comprises at least two different PVB-containing compositions including a first PVB-containing composition and a second PVB-containing composition, with the first PVB-containing composition having a different plasticizer content than the second PVB-containing composition, or
wherein the PVB feed composition comprises at least two different PVB-containing compositions including a first PVB-containing composition and a second PVB-containing composition, with the first PVB-containing composition having a different plasticizer type than the second PVB-containing composition,
or wherein the PVB feed composition comprises at least two different PVB-containing compositions including a first PVB-containing composition and a second PVB-containing composition, with the first PVB-containing composition having a different molecular weight than the second PVB-containing composition, or
wherein the PVB feed composition comprises at least two different PVB-containing compositions including a first PVB-containing composition and a second PVB-containing composition, with the first PVB-containing composition having different additives than the second PVB-containing composition, wherein the additives are selected from one or more of the following: adhesion control agents, UV stabilizers, anti-oxidants, IR absorbers, and colorants, or
wherein when the PVB resin is formed into a 0.772 mm PVB layer and positioned between two 2.3 mm sheets of glass to form a laminated glass panel, the laminated glass panel has a haze of less than 5%, less than 2%, less than 1%, less than 0.5%, or less than 0.25%, haze being measured in accordance with ASTM D1003-Procedure B using Illuminant C, at an observer angle of 2 degrees.

12. The process of claim 11, wherein said combining and heating of step (a) includes agitating the PVB feed composition, the solvent, the catalyst, and/or the butyraldehyde.

13. The process of claim 11 or 12, wherein the PVB feed composition has a molecular weight greater than 225K, greater than 250K, greater than 275K, or greater than 300K, or wherein the PVB resin has a molecular weight that is at least 30K, at least 40K, at least 50K, at least 60K, at least 70K, at least 80K, at least 90K, or at least 100K Daltons less than the molecular weight of the PVB feed composition, or wherein the PVB resin has a viscosity of less than 230 mPa*s (230 cps), less than 220 mPa*s (220 cps), less than 210 mPa*s (210 cps), and/or less than 200 mPa*s (200 cps), the viscosity being determined by the viscosity test as described in the description;
or wherein the PVB resin has a percent residual polyvinyl alcohol (PVOH) content from 14 to 50%, from 15 to 25%, from 16 to 22%, from 18.0 to 19.0%, or about 18.7% using cloud point measurement or infrared sensor or titration.

14. The process of any of claims 1 to 13, wherein the PVB feed composition comprises post-consumer recycle PVB, or wherein the PVB feed composition comprises post-industrial recycle PVB, or wherein the PVB feed composition comprises recycle trim PVB, or wherein the PVB feed composition comprises virgin PVB, or wherein the solvent comprises alcohol, or wherein the catalyst comprises sulfuric acid.

15. The process of any of claims 1 to 14, further including the step of filtering the equilibrated PVB-containing composition to remove solids, or further including the step of neutralizing the equilibrated PVB-containing composition by adding a base, wherein the base comprises potassium hydroxide, or further including the step of precipitating the equilibrated PVB-containing composition to obtain a PVB resin, or further including the step of drying the PVB resin, or further including the step of washing the PVB resin to remove salt impurities.

## Patentansprüche

1. Verfahren zur Rückgewinnung von Polyvinylbutyral (PVB), wobei das Verfahren die folgenden Schritte umfasst:
(a) Mischen einer PVB-Einsatz-Zusammensetzung mit einem Lösungsmittel, einem Katalysator und gegebenenfalls Butyraldehyd, um eine äquilibrierte PVB-haltige Zusammensetzung herzustellen, wobei die PVB-Einsatz-Zusammensetzung mindestens zwei verschiedene PVB-haltige Zusammensetzungen umfasst;
(b) Bestimmen eines Restgehalts an Polyvinylalkohol (PVOH) der äquilibrierten PVB-haltigen Zusammensetzung unter Verwendung von Trübungspunktmessung oder Infrarotsensor oder Titration; und
(c) Einstellen der beim Mischen in Schritt (a) verwendeten Menge an Butyraldehyd basierend auf dem in Schritt (b) bestimmten Rest-PVOH-Gehalt;
wobei das Verfahren ferner den Schritt des Festlegens eines Ziel-Rest-PVOH-Gehalts für die äquilibrierte PVB-haltige Zusammensetzung umfasst;
wobei die mindestens zwei verschiedenen PVB-haltige Zusammensetzungen eine erste PVB-haltige Zusammensetzung und eine zweite PVB-haltige Zusammensetzung einschließen, wobei die erste PVB-haltige Zusammensetzung einen anderen PVOH-Gehalt aufweist als die zweite PVB-haltige Zusammensetzung, und wobei eine relative Differenz im Rest-PVOH-Gehalt der ersten PVB-haltigen Zusammensetzung und im Rest-PVOH-Gehalt der zweiten PVB-haltigen Zusammensetzung zwischen 2 und 10 Gew.-% liegt, oder
wobei die mindestens zwei verschiedenen PVB-haltigen Zusammensetzungen eine erste PVB-haltige Zusammensetzung und eine zweite PVB-haltige Zusammensetzung einschließen, wobei die erste PVB-haltige Zusammensetzung einen anderen Aldehydgehalt aufweist als die zweite PVB-haltige Zusammensetzung, oder
wobei die mindestens zwei verschiedenen PVB-haltigen Zusammensetzungen eine erste PVB-haltige Zusammensetzung und eine zweite PVB-haltige Zusammensetzung einschließen, wobei die erste PVB-haltige Zusammensetzung einen anderen Vinylacetatgehalt aufweist als die zweite PVB-haltige Zusammensetzung, oder
wobei die mindestens zwei verschiedenen PVB-haltigen Zusammensetzungen eine erste PVB-haltige Zusammensetzung und eine zweite PVB-haltige Zusammensetzung einschließen, wobei die erste PVB-haltige Zusammensetzung einen anderen Weichmachergehalt aufweist als die zweite PVB-haltige Zusammensetzung, oder
wobei die mindestens zwei verschiedenen PVB-haltigen Zusammensetzungen eine erste PVB-haltige Zusammensetzung und eine zweite PVB-haltige Zusammensetzung einschließen, wobei die erste PVB-haltige Zusammensetzung einen anderen Weichmachertyp aufweist als die zweite PVB-haltige Zusammensetzung, oder
wobei die mindestens zwei verschiedenen PVB-haltigen Zusammensetzungen eine erste PVB-haltige Zusammensetzung und eine zweite PVB-haltige Zusammensetzung einschließen, wobei die erste PVB-haltige Zusammensetzung ein anderes Molekulargewicht aufweist als die zweite PVB-haltige Zusammensetzung, oder
wobei die mindestens zwei verschiedenen PVB-haltigen Zusammensetzungen eine erste PVB-haltige Zusammensetzung und eine zweite PVB-haltige Zusammensetzung einschließen, wobei die erste PVB-haltige Zusammensetzung andere Additive aufweist als die zweite PVB-haltige Zusammensetzung, wobei die Additive ausgewählt sind aus einem oder mehreren der folgenden: Haftungssteuerungsmittel, UV-Stabilisatoren, Antioxidantien, IR-Absorber und Farbmittel.

2. Verfahren nach Anspruch 1, wobei, falls der in Schritt (b) bestimmte Rest-PVOH-Gehalt größer als der Ziel-Rest-PVOH-Gehalt ist, das Einstellen in Schritt (c) das Erhöhen der beim Mischen in Schritt (a) verwendeten Menge an Butyraldehyd umfasst, oder wobei, falls der in Schritt (b) bestimmte Rest-PVOH-Gehalt geringer als der Ziel-Rest-PVOH-Gehalt ist, das Einstellen in Schritt (c) das Verringern der beim Mischen in Schritt (a) verwendeten Menge an Butyraldehyd umfasst, und wobei das Verringern der beim Mischen in Schritt (a) verwendeten Menge an Butyraldehyd das Extrahieren von Butyraldehyd umfasst.

3. Verfahren nach Anspruch 1 oder 2, wobei die äquilibrierte PVB-haltige Zusammensetzung eine Lösung ist und das Bestimmen in Schritt (b) durch Trübungspunktmessung erfolgt, oder die äquilibrierte PVB-haltige Zusammensetzung ein PVB-Harz ist und das Bestimmen in Schritt (b) unter Verwendung eines Infrarotsensors oder durch Titration erfolgt.

4. Verfahren nach einem der Ansprüche 1 bis 3, wobei das Mischen in Schritt (a) das Erhitzen der PVB-Einsatz-Zusammensetzung, des Lösungsmittels, des Katalysators und/oder des Butyraldehyds umfasst, oder wobei das Mischen in Schritt (a) das Rühren der PVB-Einsatz-Zusammensetzung, des Lösungsmittels, des Katalysators und/oder des Butyraldehyds umfasst.

5. Verfahren zur Rückgewinnung von Poly(vinylbutyral) (PVB), wobei das Verfahren die folgenden Schritte umfasst:
(a) Festlegen eines Ziel-Restgehalts an Polyvinylalkohol (PVOH);
(b) Kombinieren einer PVB-Einsatz-Zusammensetzung mit einem Lösungsmittel, einem Katalysator und gegebenenfalls Butyraldehyd, um eine äquilibrierte PVB-haltige Zusammensetzung herzustellen, wobei die PVB-Einsatz-Zusammensetzung mindestens zwei verschiedene PVB-haltige Zusammensetzungen umfasst;
(c) Messen eines Rest-PVOH-Gehalts der äquilibrierten PVB-haltigen Zusammensetzung unter Verwendung von Trübungspunktmessung oder Infrarotsensor oder Titration; und
(d) Einstellen der beim Kombinieren in Schritt (b) verwendeten Menge an Butyraldehyd basierend auf einem Vergleich zwischen dem Ziel-Rest-PVOH-Gehalt und dem in Schritt (c) gemessenen Rest-PVOH-Gehalt;
wobei die mindestens zwei verschiedenen PVB-haltige Zusammensetzungen eine erste PVB-haltige Zusammensetzung und eine zweite PVB-haltige Zusammensetzung einschließen, wobei die erste PVB-haltige Zusammensetzung einen anderen PVOH-Gehalt aufweist als die zweite PVB-haltige Zusammensetzung, und wobei eine relative Differenz im Rest-PVOH-Gehalt der ersten PVB-haltigen Zusammensetzung und im Rest-PVOH-Gehalt der zweiten PVB-haltigen Zusammensetzung zwischen 2 und 10 Gew.-% liegt, oder
wobei die mindestens zwei verschiedenen PVB-haltigen Zusammensetzungen eine erste PVB-haltige Zusammensetzung und eine zweite PVB-haltige Zusammensetzung einschließen, wobei die erste PVB-haltige Zusammensetzung einen anderen Aldehydgehalt aufweist als die zweite PVB-haltige Zusammensetzung, oder
wobei die mindestens zwei verschiedenen PVB-haltigen Zusammensetzungen eine erste PVB-haltige Zusammensetzung und eine zweite PVB-haltige Zusammensetzung einschließen, wobei die erste PVB-haltige Zusammensetzung einen anderen Vinylacetatgehalt aufweist als die zweite PVB-haltige Zusammensetzung, oder
wobei die mindestens zwei verschiedenen PVB-haltigen Zusammensetzungen eine erste PVB-haltige Zusammensetzung und eine zweite PVB-haltige Zusammensetzung einschließen, wobei die erste PVB-haltige Zusammensetzung einen anderen Weichmachergehalt aufweist als die zweite PVB-haltige Zusammensetzung, oder
wobei die mindestens zwei verschiedenen PVB-haltigen Zusammensetzungen eine erste PVB-haltige Zusammensetzung und eine zweite PVB-haltige Zusammensetzung einschließen, wobei die erste PVB-haltige Zusammensetzung einen anderen Weichmachertyp aufweist als die zweite PVB-haltige Zusammensetzung, oder
wobei die mindestens zwei verschiedenen PVB-haltigen Zusammensetzungen eine erste PVB-haltige Zusammensetzung und eine zweite PVB-haltige Zusammensetzung einschließen, wobei die erste PVB-haltige Zusammensetzung ein anderes Molekulargewicht aufweist als die zweite PVB-haltige Zusammensetzung, oder
wobei die mindestens zwei verschiedenen PVB-haltigen Zusammensetzungen eine erste PVB-haltige Zusammensetzung und eine zweite PVB-haltige Zusammensetzung einschließen, wobei die erste PVB-haltige Zusammensetzung andere Additive aufweist als die zweite PVB-haltige Zusammensetzung, wobei die Additive ausgewählt sind aus einem oder mehreren der folgenden: Haftungssteuerungsmittel, UV-Stabilisatoren, Antioxidantien, IR-Absorber und Farbmittel.

6. Verfahren nach Anspruch 5, wobei, falls der in Schritt (c) gemessene Rest-PVOH-Gehalt größer als der in Schritt (a) festgelegte Ziel-Rest-PVOH-Gehalt ist, das Einstellen in Schritt (d) das Erhöhen der beim Kombinieren in Schritt (b) verwendeten Menge an Butyraldehyd umfasst, oder wobei, falls der in Schritt (c) gemessene Rest-PVOH-Gehalt geringer als der in Schritt (a) festgelegte Ziel-Rest-PVOH-Gehalt ist, das Einstellen in Schritt (d) das Verringern der beim Kombinieren in Schritt (b) verwendeten Menge an Butyraldehyd umfasst, und wobei das Verringern der beim Kombinieren in Schritt (b) verwendeten Menge an Butyraldehyd das Extrahieren von Butyraldehyd umfasst.

7. Verfahren nach Anspruch 5 oder 6, wobei die äquilibrierte PVB-haltige Zusammensetzung eine Lösung ist und das Messen in Schritt (c) durch Trübungspunktmessung erfolgt, oder wobei die äquilibrierte PVB-haltige Zusammensetzung ein PVB-Harz ist und das Messen in Schritt (c) unter Verwendung eines Infrarotsensors erfolgt, oder wobei die äquilibrierte PVB-haltige Zusammensetzung ein PVB-Harz ist und das Messen in Schritt (c) durch Titration erfolgt; oder
wobei das Kombinieren in Schritt (b) das Erhitzen der PVB-Einsatz-Zusammensetzung, des Lösungsmittels, des Katalysators und/oder des Butyraldehyds umfasst, oder wobei das Kombinieren in Schritt (b) das Rühren der PVB-Einsatz-Zusammensetzung, des Lösungsmittels, des Katalysators und/oder des Butyraldehyds umfasst; oder
wobei der Ziel-Rest-PVOH-Gehalt von 14 bis 50 Gew.-%, von 15 bis 25 Gew.-%, von 16 bis 22 Gew.-%, von 18,0 bis 19,0 Gew.-% oder etwa 18,7 Gew.-% beträgt.

8. Verfahren nach einem der Ansprüche 1 bis 7, wobei, wenn die äquilibrierte PVB-haltige Zusammensetzung mit 20 phr Weichmacher gemischt wird, um ein PVB-Harz zu bilden, und das PVB-Harz zu einer 0,772 mm dicken PVB-Schicht geformt und zwischen zwei 2,3 mm dicken Glasscheiben angeordnet wird, um eine Verbundglasscheibe zu bilden, die Verbundglasscheibe eine Trübung von weniger als 5 %, weniger als 2 %, weniger als 1 %, weniger als 0,5 % oder weniger als 0,25 % aufweist, wobei die Trübung gemäß ASTM D1003-Verfahren B unter Verwendung von Normlichtart C bei einem Beobachtungswinkel von 2 Grad gemessen wird.

9. Verfahren zur Rückgewinnung von Poly(vinylbutyral) (PVB), wobei das Verfahren die folgenden Schritte umfasst:
(a) Mischen einer PVB-Einsatz-Zusammensetzung mit einem Lösungsmittel, einem Katalysator und gegebenenfalls Butyraldehyd, um eine äquilibrierte PVB-haltige Zusammensetzung herzustellen, wobei die PVB-Einsatz-Zusammensetzung ein Molekulargewicht von mehr als 200k Dalton aufweist, gemessen durch Größenausschlusschromatographie unter Verwendung von Kleinwinkel-Laserlichtstreuung;
(b) Herstellen eines PVB-Harzes aus der äquilibrierten PVB-haltigen Zusammensetzung, wobei das PVB-Harz ein Molekulargewicht aufweist, das mindestens 25k Dalton geringer ist als das Molekulargewicht der PVB-Einsatz-Zusammensetzung;
wobei die PVB-Einsatz-Zusammensetzung mindestens zwei verschiedene PVB-haltige Zusammensetzungen umfasst, einschließlich einer ersten PVB-haltigen Zusammensetzung und einer zweiten PVB-haltigen Zusammensetzung, wobei die erste PVB-haltige Zusammensetzung einen anderen PVB-Gehalt aufweist als die zweite PVB-haltige Zusammensetzung, oder
wobei die PVB-Einsatz-Zusammensetzung mindestens zwei verschiedene PVB-haltige Zusammensetzungen umfasst, einschließlich einer ersten PVB-haltigen Zusammensetzung und einer zweiten PVB-haltigen Zusammensetzung, wobei die erste PVB-haltige Zusammensetzung einen anderen PVOH-Gehalt aufweist als die zweite PVB-haltige Zusammensetzung, oder
wobei die PVB-Einsatz-Zusammensetzung mindestens zwei verschiedene PVB-haltige Zusammensetzungen umfasst, einschließlich einer ersten PVB-haltigen Zusammensetzung und einer zweiten PVB-haltigen Zusammensetzung, wobei die erste PVB-haltige Zusammensetzung einen anderen Vinylacetatgehalt aufweist als die zweite PVB-haltige Zusammensetzung, oder
wobei die PVB-Einsatz-Zusammensetzung mindestens zwei verschiedene PVB-haltige Zusammensetzungen umfasst, einschließlich einer ersten PVB-haltigen Zusammensetzung und einer zweiten PVB-haltigen Zusammensetzung, wobei die erste PVB-haltige Zusammensetzung einen anderen Weichmachergehalt aufweist als die zweite PVB-haltige Zusammensetzung, oder
wobei die PVB-Einsatz-Zusammensetzung mindestens zwei verschiedene PVB-haltige Zusammensetzungen umfasst, einschließlich einer ersten PVB-haltigen Zusammensetzung und einer zweiten PVB-haltigen Zusammensetzung, wobei die erste PVB-haltige Zusammensetzung einen anderen Weichmachertyp aufweist als die zweite PVB-haltige Zusammensetzung, oder
wobei die PVB-Einsatz-Zusammensetzung mindestens zwei verschiedene PVB-haltige Zusammensetzungen umfasst, einschließlich einer ersten PVB-haltigen Zusammensetzung und einer zweiten PVB-haltigen Zusammensetzung, wobei die erste PVB-haltige Zusammensetzung ein anderes Molekulargewicht aufweist als die zweite PVB-haltige Zusammensetzung, oder
wobei die PVB-Einsatz-Zusammensetzung mindestens zwei verschiedene PVB-haltige Zusammensetzungen umfasst, einschließlich einer ersten PVB-haltigen Zusammensetzung und einer zweiten PVB-haltigen Zusammensetzung, wobei die erste PVB-haltige Zusammensetzung andere Additive aufweist als die zweite PVB-haltige Zusammensetzung, wobei die Additive ausgewählt sind aus einem oder mehreren der folgenden: Haftungssteuerungsmittel, UV-Stabilisatoren, Antioxidantien, IR-Absorber und Farbmittel, oder
wobei, wenn das PVB-Harz zu einer 0,772 mm dicken PVB-Schicht geformt und zwischen zwei 2,3 mm dicken Glasscheiben angeordnet wird, um eine Verbundglasscheibe zu bilden, die Verbundglasscheibe eine Trübung von weniger als 5 %, weniger als 2 %, weniger als 1 %, weniger als 0,5 % oder weniger als 0,25 % aufweist, wobei die Trübung gemäß ASTM D1003-Verfahren B unter Verwendung von Normlichtart C bei einem Beobachtungswinkel von 2 Grad gemessen wird.

10. Verfahren nach Anspruch 9, wobei das Mischen in Schritt (a) das Erhitzen der PVB-Einsatz-Zusammensetzung, des Lösungsmittels, des Katalysators und/oder des Butyraldehyds umfasst, oder wobei das Mischen in Schritt (a) das Rühren der PVB-Einsatz-Zusammensetzung, des Lösungsmittels, des Katalysators und/oder des Butyraldehyds umfasst, oder wobei das Herstellen in Schritt (b) das Ausfällen der äquilibrierten PVB-haltigen Zusammensetzung umfasst, um das PVB-Harz zu erhalten.

11. Verfahren zur Rückgewinnung von Poly(vinylbutyral) (PVB), wobei das Verfahren die folgenden Schritte umfasst:
(a) Kombinieren und Erhitzen einer PVB-Einsatz-Zusammensetzung, eines Lösungsmittels, eines Katalysators und gegebenenfalls Butyraldehyds, um eine äquilibrierte PVB-haltige Zusammensetzung herzustellen, wobei die PVB-Einsatz-Zusammensetzung ein Molekulargewicht von mehr als 200k Dalton aufweist, gemessen durch Größenausschlusschromatographie unter Verwendung von Kleinwinkel-Laserlichtstreuung;
(b) Ausfällen der äquilibrierten PVB-haltigen Zusammensetzung, um ein PVB-Harz herzustellen, wobei das PVB-Harz ein Molekulargewicht aufweist, das mindestens 25k geringer ist als das Molekulargewicht der PVB-Einsatz-Zusammensetzung;
wobei die PVB-Einsatz-Zusammensetzung mindestens zwei verschiedene PVB-haltige Zusammensetzungen umfasst, einschließlich einer ersten PVB-haltigen Zusammensetzung und einer zweiten PVB-haltigen Zusammensetzung, wobei die erste PVB-haltige Zusammensetzung einen anderen PVB-Gehalt aufweist als die zweite PVB-haltige Zusammensetzung, oder
wobei die PVB-Einsatz-Zusammensetzung mindestens zwei verschiedene PVB-haltige Zusammensetzungen umfasst, einschließlich einer ersten PVB-haltigen Zusammensetzung und einer zweiten PVB-haltigen Zusammensetzung, wobei die erste PVB-haltige Zusammensetzung einen anderen PVOH-Gehalt aufweist als die zweite PVB-haltige Zusammensetzung, oder
wobei die PVB-Einsatz-Zusammensetzung mindestens zwei verschiedene PVB-haltige Zusammensetzungen umfasst, einschließlich einer ersten PVB-haltigen Zusammensetzung und einer zweiten PVB-haltigen Zusammensetzung, wobei die erste PVB-haltige Zusammensetzung einen anderen Vinylacetatgehalt aufweist als die zweite PVB-haltige Zusammensetzung, oder
wobei die PVB-Einsatz-Zusammensetzung mindestens zwei verschiedene PVB-haltige Zusammensetzungen umfasst, einschließlich einer ersten PVB-haltigen Zusammensetzung und einer zweiten PVB-haltigen Zusammensetzung, wobei die erste PVB-haltige Zusammensetzung einen anderen Weichmachergehalt aufweist als die zweite PVB-haltige Zusammensetzung, oder
wobei die PVB-Einsatz-Zusammensetzung mindestens zwei verschiedene PVB-haltige Zusammensetzungen umfasst, einschließlich einer ersten PVB-haltigen Zusammensetzung und einer zweiten PVB-haltigen Zusammensetzung, wobei die erste PVB-haltige Zusammensetzung einen anderen Weichmachertyp aufweist als die zweite PVB-haltige Zusammensetzung, oder
wobei die PVB-Einsatz-Zusammensetzung mindestens zwei verschiedene PVB-haltige Zusammensetzungen umfasst, einschließlich einer ersten PVB-haltigen Zusammensetzung und einer zweiten PVB-haltigen Zusammensetzung, wobei die erste PVB-haltige Zusammensetzung ein anderes Molekulargewicht aufweist als die zweite PVB-haltige Zusammensetzung, oder
wobei die PVB-Einsatz-Zusammensetzung mindestens zwei verschiedene PVB-haltige Zusammensetzungen umfasst, einschließlich einer ersten PVB-haltigen Zusammensetzung und einer zweiten PVB-haltigen Zusammensetzung, wobei die erste PVB-haltige Zusammensetzung andere Additive aufweist als die zweite PVB-haltige Zusammensetzung, wobei die Additive ausgewählt sind aus einem oder mehreren der folgenden: Haftungssteuerungsmittel, UV-Stabilisatoren, Antioxidantien, IR-Absorber und Farbmittel, oder
wobei, wenn das PVB-Harz zu einer 0,772 mm dicken PVB-Schicht geformt und zwischen zwei 2,3 mm dicken Glasscheiben angeordnet wird, um eine Verbundglasscheibe zu bilden, die Verbundglasscheibe eine Trübung (Haze) von weniger als 5 %, weniger als 2 %, weniger als 1 %, weniger als 0,5 % oder weniger als 0,25 % aufweist, wobei die Trübung gemäß ASTM D1003-Verfahren B unter Verwendung von Normlichtart C bei einem Beobachtungswinkel von 2 Grad gemessen wird.

12. Verfahren nach Anspruch 11, wobei das Kombinieren und Erhitzen in Schritt (a) das Rühren der PVB-Einsatz-Zusammensetzung, des Lösungsmittels, des Katalysators und/oder des Butyraldehyds umfasst.

13. Verfahren nach Anspruch 11 oder 12, wobei die PVB-Einsatz-Zusammensetzung ein Molekulargewicht von mehr als 225k, mehr als 250k, mehr als 275k oder mehr als 300k aufweist, oder wobei das PVB-Harz ein Molekulargewicht aufweist, das mindestens 30k, mindestens 40k, mindestens 50k, mindestens 60k, mindestens 70k, mindestens 80k, mindestens 90k oder mindestens 100k Dalton geringer ist als das Molekulargewicht der PVB-Einsatz-Zusammensetzung, oder wobei das PVB-Harz eine Viskosität von weniger als 230 mPa*s (230 cps), weniger als 220 mPa*s (220 cps), weniger als 210 mPa*s (210 cps) und/oder weniger als 200 mPa*s (200 cps) aufweist, wobei die Viskosität durch den in der Beschreibung beschriebenen Viskositätstest bestimmt wird;
oder wobei das PVB-Harz einen prozentualen Restgehalt an Polyvinylalkohol (PVOH) von 14 bis 50 %, 15 bis 25 %, 16 bis 22 %, 18,0 bis 19,0 % oder etwa 18,7 % aufweist, bestimmt unter Verwendung von Trübungspunktmessung oder Infrarotsensor oder Titration.

14. Verfahren nach einem der Ansprüche 1 bis 13, wobei die PVB-Einsatz-Zusammensetzung Post-Consumer-Recycling-PVB umfasst, oder wobei die PVB-Einsatz-Zusammensetzung Post-Industrial-Recycling-PVB umfasst, oder wobei die PVB-Einsatz-Zusammensetzung Recycling-Verschnitt-PVB umfasst, oder wobei die PVB-Einsatz-Zusammensetzung Frisch-PVB umfasst, oder wobei das Lösungsmittel Alkohol umfasst, oder wobei der Katalysator Schwefelsäure umfasst.

15. Verfahren nach einem der Ansprüche 1 bis 14, ferner umfassend den Schritt des Filtrierens der äquilibrierten PVB-haltigen Zusammensetzung, um Feststoffe zu entfernen; oder ferner umfassend den Schritt des Neutralisierens der äquilibrierten PVB-haltigen Zusammensetzung durch Zugabe einer Base, wobei die Base Kaliumhydroxid umfasst; oder ferner umfassend den Schritt des Ausfällens der äquilibrierten PVB-haltigen Zusammensetzung, um ein PVB-Harz zu erhalten; oder ferner umfassend den Schritt des Trocknens des PVB-Harzes; oder ferner umfassend den Schritt des Waschens des PVB-Harzes, um Salzverunreinigungen zu entfernen.

## Revendications

1. Procédé de récupération de poly(butyral de vinyle) (PVB), ledit procédé comprenant les étapes suivantes :
(a) le mélange d'une composition d'alimentation PVB avec un solvant, un catalyseur et, éventuellement, du butyraldéhyde pour produire une composition équilibrée contenant du PVB, dans lequel la composition d'alimentation PVB comprend au moins deux compositions différentes contenant du PVB ;
(b) la détermination de la teneur résiduelle en alcool polyvinylique (PVOH) de la composition équilibrée contenant du PVB par mesure du point de trouble, par capteur infrarouge ou par titrage ; et
(c) l'ajustement de la quantité de butyraldéhyde utilisée dans ledit mélange de l'étape (a) en fonction de la teneur résiduelle en PVOH déterminée à l'étape (b) ;
le procédé comportant également l'étape de définition d'une teneur résiduelle cible en PVOH pour la composition équilibrée contenant du PVB ;
dans lequel les au moins deux compositions différentes contenant du PVB comportent une première composition contenant du PVB et une seconde composition contenant du PVB, la première composition contenant du PVB ayant une teneur en PVOH différente de celle de la seconde composition contenant du PVB, et dans lequel la différence relative entre la teneur résiduelle en PVOH de la première composition contenant du PVB et la teneur résiduelle en PVOH de la seconde composition contenant du PVB est comprise entre 2 et 10 % en poids, ou
dans lequel les au moins deux compositions différentes contenant du PVB comportent une première composition contenant du PVB et une seconde composition contenant du PVB, la première composition contenant du PVB ayant une teneur en aldéhyde différente de celle de la seconde composition contenant du PVB, ou
dans lequel les au moins deux compositions différentes contenant du PVB comportent une première composition contenant du PVB et une seconde composition contenant du PVB, la première composition contenant du PVB ayant une teneur en acétate de vinyle différente de celle de la seconde composition contenant du PVB, ou
dans lequel les au moins deux compositions différentes contenant du PVB comportent une première composition contenant du PVB et une seconde composition contenant du PVB, la première composition contenant du PVB ayant une teneur en plastifiant différente de celle de la seconde composition contenant du PVB, ou
dans lequel les au moins deux compositions différentes contenant du PVB comportent une première composition contenant du PVB et une seconde composition contenant du PVB, la première composition contenant du PVB ayant un type de plastifiant différent de celui de la seconde composition contenant du PVB, ou
dans lequel les au moins deux compositions différentes contenant du PVB comportent une première composition contenant du PVB et une seconde composition contenant du PVB, la première composition contenant du PVB ayant un poids moléculaire différent de celui de la seconde composition contenant du PVB, ou
dans lequel les au moins deux compositions différentes contenant du PVB comportent une première composition contenant du PVB et une seconde composition contenant du PVB, la première composition contenant du PVB ayant des additifs différents de ceux de la seconde composition contenant du PVB, dans lequel les additifs sont choisis parmi un ou plusieurs des éléments suivants : agents de contrôle d'adhérence, stabilisateurs UV, antioxydants, absorbeurs IR et colorants.

2. Procédé selon la revendication 1, dans lequel si la teneur résiduelle en PVOH déterminée à l'étape (b) est supérieure à la teneur résiduelle cible en PVOH, ledit ajustement de l'étape (c) comporte l'augmentation de la quantité de butyraldéhyde utilisée dans ledit mélange de l'étape (a), ou dans lequel si la teneur résiduelle en PVOH déterminée à l'étape (b) est inférieure à la teneur résiduelle cible en PVOH, ledit ajustement de l'étape (c) comporte la diminution de la quantité de butyraldéhyde utilisée dans ledit mélange de l'étape (a), et dans lequel la diminution de la quantité de butyraldéhyde utilisée dans ledit mélange de l'étape (a) comporte l'extraction du butyraldéhyde.

3. Procédé selon la revendication 1 ou 2, dans lequel la composition équilibrée contenant du PVB est une solution et ladite détermination de l'étape (b) est effectuée par mesure du point de trouble, ou la composition équilibrée contenant du PVB est une résine PVB et ladite détermination de l'étape (b) est effectuée à l'aide d'un capteur infrarouge ou par titrage.

4. Procédé selon l'une quelconque des revendications 1 à 3, dans lequel ledit mélange de l'étape (a) comporte le chauffage de la composition d'alimentation PVB, du solvant, du catalyseur et/ou du butyraldéhyde, ou dans lequel ledit mélange de l'étape (a) comporte l'agitation de la composition d'alimentation PVB, du solvant, du catalyseur et/ou du butyraldéhyde.

5. Procédé de récupération de poly(butyral de vinyle) (PVB), ledit procédé comprenant les étapes suivantes :
(a) l'établissement d'une teneur résiduelle cible en alcool polyvinylique (PVOH) ;
(b) la combinaison d'une composition d'alimentation PVB avec un solvant, un catalyseur et, éventuellement, du butyraldéhyde pour produire une composition équilibrée contenant du PVB, dans lequel la composition d'alimentation PVB comprend au moins deux compositions différentes contenant du PVB ;
(c) la mesure de la teneur résiduelle en PVOH de la composition équilibrée contenant du PVB par mesure du point de trouble, par capteur infrarouge ou par titrage ; et
(d) l'ajustement de la quantité de butyraldéhyde utilisée dans ladite combinaison de l'étape (b) sur la base d'une comparaison entre la teneur résiduelle cible en PVOH et la teneur résiduelle en PVOH mesurée à l'étape (c) ;
dans lequel les au moins deux compositions différentes contenant du PVB comportent une première composition contenant du PVB et une seconde composition contenant du PVB, la première composition contenant du PVB ayant une teneur en PVOH différente de celle de la seconde composition contenant du PVB, et dans lequel la différence relative entre la teneur résiduelle en PVOH de la première composition contenant du PVB et la teneur résiduelle en PVOH de la seconde composition contenant du PVB est comprise entre 2 et 10 % en poids, ou
dans lequel les au moins deux compositions différentes contenant du PVB comportent une première composition contenant du PVB et une seconde composition contenant du PVB, la première composition contenant du PVB ayant une teneur en aldéhyde différente de celle de la seconde composition contenant du PVB, ou
dans lequel les au moins deux compositions différentes contenant du PVB comportent une première composition contenant du PVB et une seconde composition contenant du PVB, la première composition contenant du PVB ayant une teneur en acétate de vinyle différente de celle de la seconde composition contenant du PVB, ou
dans lequel les au moins deux compositions différentes contenant du PVB comportent une première composition contenant du PVB et une seconde composition contenant du PVB, la première composition contenant du PVB ayant une teneur en plastifiant différente de celle de la seconde composition contenant du PVB, ou
dans lequel les au moins deux compositions différentes contenant du PVB comportent une première composition contenant du PVB et une seconde composition contenant du PVB, la première composition contenant du PVB ayant un type de plastifiant différent de celui de la seconde composition contenant du PVB, ou
dans lequel les au moins deux compositions différentes contenant du PVB comportent une première composition contenant du PVB et une seconde composition contenant du PVB, la première composition contenant du PVB ayant un poids moléculaire différent de celui de la seconde composition contenant du PVB, ou
dans lequel les au moins deux compositions différentes contenant du PVB comportent une première composition contenant du PVB et une seconde composition contenant du PVB, la première composition contenant du PVB ayant des additifs différents de ceux de la seconde composition contenant du PVB, dans lequel les additifs sont choisis parmi un ou plusieurs des éléments suivants : agents de contrôle d'adhérence, stabilisateurs UV, antioxydants, absorbeurs IR et colorants.

6. Procédé selon la revendication 5, dans lequel si la teneur résiduelle en PVOH mesurée à l'étape (c) est supérieure à la teneur résiduelle cible en PVOH établie à l'étape (a), ledit ajustement de l'étape (d) comporte l'augmentation de la quantité de butyraldéhyde utilisée dans ladite combinaison de l'étape (b), ou dans lequel si la teneur résiduelle en PVOH mesurée à l'étape (c) est inférieure à la teneur résiduelle cible en PVOH établie à l'étape (a), ledit ajustement de l'étape (d) comporte la diminution de la quantité de butyraldéhyde utilisée dans ladite combinaison de l'étape (b), et dans lequel la diminution de la quantité de butyraldéhyde utilisée dans ladite combinaison de l'étape (b) comporte l'extraction du butyraldéhyde.

7. Procédé selon la revendication 5 ou 6, dans lequel la composition équilibrée contenant du PVB est une solution et ladite mesure de l'étape (c) est effectuée par mesure du point de trouble, ou dans lequel la composition équilibrée contenant du PVB est une résine PVB et ladite mesure de l'étape (c) est effectuée à l'aide d'un capteur infrarouge, ou dans lequel la composition équilibrée contenant du PVB est une résine PVB et ladite mesure de l'étape (c) est effectuée par titrage ; ou
dans lequel ladite combinaison de l'étape (b) comporte le chauffage de la composition d'alimentation PVB, du solvant, du catalyseur et/ou du butyraldéhyde, ou dans lequel ladite combinaison de l'étape (b) comporte l'agitation de la composition d'alimentation PVB, du solvant, du catalyseur et/ou du butyraldéhyde ; ou
dans lequel la teneur résiduelle cible en PVOH est de 14 à 50 % en poids, de 15 à 25 % en poids, de 16 à 22 % en poids, de 18,0 à 19,0 % en poids, ou d'environ 18,7 % en poids.

8. Procédé selon l'une quelconque des revendications 1 à 7, dans lequel, lorsque la composition équilibrée contenant du PVB est mélangée avec 20 phr de plastifiant pour former une résine PVB, et que la résine PVB est formée en une couche de PVB de 0,772 mm et positionnée entre deux feuilles de verre de 2,3 mm pour former un panneau de verre feuilleté, le panneau de verre feuilleté présente un voile inférieur à 5 %, inférieur à 2 %, inférieur à 1 %, inférieur à 0,5 % ou inférieur à 0,25 %, le voile étant mesuré conformément à la norme ASTM D1003 - Procédure B en utilisant l'illuminant C, à un angle d'observation de 2 degrés.

9. Procédé de récupération de poly(butyral de vinyle) (PVB), ledit procédé comprenant les étapes suivantes :
(a) le mélange d'une composition d'alimentation PVB avec un solvant, un catalyseur et, éventuellement, du butyraldéhyde pour produire une composition équilibrée contenant du PVB, dans lequel la composition d'alimentation PVB a un poids moléculaire supérieur à 200K Daltons, mesuré par chromatographie d'exclusion stérique utilisant la diffusion de la lumière laser à faible angle ;
(b) la production d'une résine PVB à partir de la composition équilibrée contenant du PVB, dans lequel la résine PVB a un poids moléculaire inférieur d'au moins 25K Daltons au poids moléculaire de la composition d'alimentation PVB ;
dans lequel la composition d'alimentation PVB comprend au moins deux compositions différentes contenant du PVB comportant une première composition contenant du PVB et une seconde composition contenant du PVB, la première composition contenant du PVB ayant une teneur en PVB différente de celle de la seconde composition contenant du PVB, ou
dans lequel la composition d'alimentation PVB comprend au moins deux compositions différentes contenant du PVB comportant une première composition contenant du PVB et une seconde composition contenant du PVB, la première composition contenant du PVB ayant une teneur en PVOH différente de celle de la seconde composition contenant du PVB, ou
dans lequel la composition d'alimentation PVB comprend au moins deux compositions différentes contenant du PVB comportant une première composition contenant du PVB et une seconde composition contenant du PVB, la première composition contenant du PVB ayant une teneur en acétate de vinyle différente de celle de la seconde composition contenant du PVB, ou
dans lequel la composition d'alimentation PVB comprend au moins deux compositions différentes contenant du PVB comportant une première composition contenant du PVB et une seconde composition contenant du PVB, la première composition contenant du PVB ayant une teneur en plastifiant différente de celle de la seconde composition contenant du PVB, ou
dans lequel la composition d'alimentation PVB comprend au moins deux compositions différentes contenant du PVB comportant une première composition contenant du PVB et une seconde composition contenant du PVB, la première composition contenant du PVB ayant un type de plastifiant différent de celui de la seconde composition contenant du PVB, ou
dans lequel la composition d'alimentation PVB comprend au moins deux compositions différentes contenant du PVB comportant une première composition contenant du PVB et une seconde composition contenant du PVB, la première composition contenant du PVB ayant un poids moléculaire différent de celui de la seconde composition contenant du PVB, ou
dans lequel la composition d'alimentation PVB comprend au moins deux compositions différentes contenant du PVB comportant une première composition contenant du PVB et une seconde composition contenant du PVB, la première composition contenant du PVB ayant des additifs différents de ceux de la seconde composition contenant du PVB, dans lequel les additifs sont choisis parmi un ou plusieurs des éléments suivants : agents de contrôle d'adhérence, stabilisants UV, antioxydants, absorbeurs IR et colorants, ou
dans lequel, lorsque la résine PVB est formée en une couche de PVB de 0,772 mm et positionnée entre deux feuilles de verre de 2,3 mm pour former un panneau de verre feuilleté, le panneau de verre feuilleté présente un voile inférieur à 5 %, inférieur à 2 %, inférieur à 1 %, inférieur à 0,5 % ou inférieur à 0,25 %, le voile étant mesuré conformément à la norme ASTM D1003 - Procédure B en utilisant l'illuminant C, à un angle d'observation de 2 degrés.

10. Procédé selon la revendication 9, dans lequel ledit mélange de l'étape (a) comporte le chauffage de la composition d'alimentation PVB, du solvant, du catalyseur et/ou du butyraldéhyde, ou dans lequel ledit mélange de l'étape (a) comporte l'agitation de la composition d'alimentation PVB, du solvant, du catalyseur et/ou du butyraldéhyde, ou dans lequel ladite production de l'étape (b) comporte la précipitation de la composition équilibrée contenant du PVB pour obtenir la résine PVB.

11. Procédé de récupération de poly(butyral de vinyle) (PVB), ledit procédé comprenant les étapes suivantes :
(a) la combinaison et le chauffage d'une composition d'alimentation PVB, d'un solvant, d'un catalyseur et, éventuellement, de butyraldéhyde pour produire une composition équilibrée contenant du PVB, dans lequel la composition d'alimentation PVB a un poids moléculaire supérieur à 200K Daltons, mesuré par chromatographie d'exclusion stérique utilisant la diffusion de la lumière laser à faible angle ;
(b) la précipitation de la composition équilibrée contenant du PVB pour produire une résine PVB, dans lequel la résine PVB a un poids moléculaire inférieur d'au moins 25K au poids moléculaire de la composition d'alimentation PVB ;
dans lequel la composition d'alimentation PVB comprend au moins deux compositions différentes contenant du PVB comportant une première composition contenant du PVB et une seconde composition contenant du PVB, la première composition contenant du PVB ayant une teneur en PVB différente de celle de la seconde composition contenant du PVB, ou
dans lequel la composition d'alimentation PVB comprend au moins deux compositions différentes contenant du PVB comportant une première composition contenant du PVB et une seconde composition contenant du PVB, la première composition contenant du PVB ayant une teneur en PVOH différente de celle de la seconde composition contenant du PVB, ou
dans lequel la composition d'alimentation PVB comprend au moins deux compositions différentes contenant du PVB comportant une première composition contenant du PVB et une seconde composition contenant du PVB, la première composition contenant du PVB ayant une teneur en acétate de vinyle différente de celle de la seconde composition contenant du PVB, ou
dans lequel la composition d'alimentation PVB comprend au moins deux compositions différentes contenant du PVB comportant une première composition contenant du PVB et une seconde composition contenant du PVB, la première composition contenant du PVB ayant une teneur en plastifiant différente de celle de la seconde composition contenant du PVB, ou
dans lequel la composition d'alimentation PVB comprend au moins deux compositions différentes contenant du PVB comportant une première composition contenant du PVB et une seconde composition contenant du PVB, la première composition contenant du PVB ayant un type de plastifiant différent de celui de la seconde composition contenant du PVB, ou
dans lequel la composition d'alimentation PVB comprend au moins deux compositions différentes contenant du PVB comportant une première composition contenant du PVB et une seconde composition contenant du PVB, la première composition contenant du PVB ayant un poids moléculaire différent de celui de la seconde composition contenant du PVB, ou
dans lequel la composition d'alimentation PVB comprend au moins deux compositions différentes contenant du PVB comportant une première composition contenant du PVB et une seconde composition contenant du PVB, la première composition contenant du PVB ayant des additifs différents de ceux de la seconde composition contenant du PVB, dans lequel les additifs sont choisis parmi un ou plusieurs des éléments suivants : agents de contrôle d'adhérence, stabilisants UV, antioxydants, absorbeurs IR et colorants, ou
dans lequel, lorsque la résine PVB est formée en une couche de PVB de 0,772 mm et positionnée entre deux feuilles de verre de 2,3 mm pour former un panneau de verre feuilleté, le panneau de verre feuilleté présente un voile inférieur à 5 %, inférieur à 2 %, inférieur à 1 %, inférieur à 0,5 % ou inférieur à 0,25 %, le voile étant mesuré conformément à la norme ASTM D1003 - Procédure B en utilisant l'illuminant C, à un angle d'observation de 2 degrés.

12. Procédé selon la revendication 11, dans lequel ladite combinaison et ledit chauffage de l'étape (a) comporte l'agitation de la composition d'alimentation PVB, du solvant, du catalyseur et/ou du butyraldéhyde.

13. Procédé selon la revendication 11 ou 12, dans lequel la composition d'alimentation PVB a un poids moléculaire supérieur à 225K, supérieur à 250K, supérieur à 275K ou supérieur à 300K, ou dans lequel la résine PVB a un poids moléculaire inférieur d'au moins 30K, d'au moins 40K, d'au moins 50K, d'au moins 60K, d'au moins 70K, d'au moins 80K, d'au moins 90K ou d'au moins 100K Daltons au poids moléculaire de la composition d'alimentation PVB, ou dans lequel la résine PVB a une viscosité inférieure à 230 mPa*s (230 cps), inférieure à 220 mPa*s (220 cps), inférieure à 210 mPa*s (210 cps) et/ou inférieure à 200 mPa*s (200 cps), la viscosité étant déterminée par le test de viscosité tel que décrit dans la description ;
ou dans lequel la résine PVB a une teneur résiduelle en alcool polyvinylique (PVOH) de 14 à 50 %, de 15 à 25 %, de 16 à 22 %, de 18,0 à 19,0 %, ou d'environ 18,7 % en utilisant la mesure du point de trouble ou un capteur infrarouge ou un titrage.

14. Procédé selon l'une quelconque des revendications 1 à 13, dans lequel la composition d'alimentation PVB comprend du PVB recyclé post-consommation, ou dans lequel la composition d'alimentation PVB comprend du PVB recyclé post-industriel, ou dans lequel la composition d'alimentation PVB comprend du PVB de découpe recyclé, ou dans lequel la composition d'alimentation PVB comprend du PVB vierge, ou dans lequel le solvant comprend de l'alcool, ou dans lequel le catalyseur comprend de l'acide sulfurique.

15. Procédé selon l'une quelconque des revendications 1 à 14, comportant également l'étape de filtration de la composition équilibrée contenant du PVB pour éliminer les solides, ou comportant également l'étape de neutralisation de la composition équilibrée contenant du PVB par ajout d'une base, dans lequel la base comprend de l'hydroxyde de potassium, ou comportant également l'étape de précipitation de la composition équilibrée contenant du PVB pour obtenir une résine PVB, ou comportant également l'étape de séchage de la résine PVB, ou comportant également l'étape de lavage de la résine PVB pour éliminer les impuretés salines.
